# FASCICULE DE BREVET EUROPEEN

(11) **EP 4 499 988 B1**
(45) Date de publication et mention de la délivrance du brevet: **28.10.2026**
(21) Numéro de dépôt: 23719042.6
(22) Date de dépôt: 27.03.2023
(51) Int. Cl.: F01D 21/14

(54) **PROCÉDÉ DE SURVEILLANCE DE L'ÉTAT DE SANTÉ DE TURBOMACHINE D'AÉRONEF**
VERFAHREN ZUR ÜBERWACHUNG DES GESUNDHEITSZUSTANDS EINER TURBOMASCHINE EINES FLUGZEUGES
METHOD OF MONITORING THE HEALTH STATE OF AN AIRCRAFT TURBOMACHINE

(30) Priorité: 28.03.2022 FR 2202755
(43) Date de publication de la demande: 05.02.2025
(73) Titulaire: SAFRAN, 75015 Paris (FR)
(72) Inventeur: RAZAKARIVONY, Sébastien Philippe, 77550 MOISSY-CRAMAYEL (FR)
(74) Mandataire: Cabinet Camus Lebkiri
(86) Numéro de dépôt international: PCT/FR2023/050432
(87) Numéro de publication internationale: WO 2023/187287

(56) Documents cités:
- FR-A1- 3 095 424
- US-A1- 2008 154 823

## Description

### DOMAINE TECHNIQUE DE L'INVENTION

Le domaine technique de l'invention est celui de la surveillance de l'état de turbomachines d'aéronefs.

La présente invention concerne un procédé de surveillance de l'état de santé de turbomachine d'aéronef.

### ARRIERE-PLAN TECHNOLOGIQUE DE L'INVENTION

Le "Health monitoring" (de l'anglais surveillance de santé) d'une turbomachine d'aéronef, par exemple un avion ou un hélicoptère, permet de suivre l'état de la turbomachine tout au long de sa vie et d'anticiper un défaut de la turbomachine à partir de données enregistrées durant des vols effectués par l'aéronef comprenant la turbomachine.

Un indicateur classique du health monitoring est le calcul de marges permettant de comparer, pour une valeur souhaitée d'au moins un paramètre d'entrée relatif à la turbomachine, une valeur théorique modélisée d'au moins un paramètre de sortie relatif à la turbomachine avec une valeur réelle dudit paramètre de sortie. Par exemple, pour obtenir une puissance P souhaitée émise par la turbomachine, une température dans la chambre de combustion T₀ de la turbomachine, modélisée physiquement, est nécessaire en théorie. La température T₀ est comparée à une température réelle T₁ dans la chambre de combustion de la turbomachine nécessaire pour obtenir une puissance P émise par la turbomachine. La température réelle T₁ augmente au fil du cycle de vie de la turbomachine et la différence entre la valeur théorique T₀ et la valeur réelle T₁ est une marge étudiée et analysée grâce à des modèles physiques, permettant d'anticiper par exemple une éventuelle défaillance et surchauffe de la turbomachine. Le calcul de marge peut être réalisé pour plusieurs valeurs de paramètres en entrée (par exemple une vitesse de rotation d'un premier arbre de la turbomachine et une vitesse de rotation d'un deuxième arbre de la turbomachine) et plusieurs valeurs de paramètres en sortie (par exemple la puissance émise par la turbomachine et la température précédemment évoquée de la turbomachine).

Les modèles physiques permettant d'étudier les marges avec des données de paramètres relatifs à la turbomachine enregistrées lors d'un régime stabilisé de la turbomachine. Cependant, il se peut qu'un hélicoptère, qui effectue par exemple des surveillances ou de l'élingage, ne fonctionne peu ou jamais en régime stabilisé durant un vol particulier, ce qui rend le calcul de marges complexe voire impossible

La demande de brevet FR3028331A1 décrit un algorithme de surveillance à base de régression. Une classification non supervisée des variables exogènes (paramètres environnementaux) différencie les contextes de vol. Pour chaque classe de conditions exogènes, un modèle de régression est proposé pour normaliser les données endogènes (paramètres de moteur) et neutraliser l'impact des variations exogènes. Ainsi tous les vols sont à iso-contexte et de fait comparables. Ils trouvent les phases stabilisées de tous les vols en fonction d'une distance à un ensemble de phases stables de références, puis calculent pour chaque phase des paramètres physiques moyens qu'ils peuvent suivre dans le temps. La demande utilise un algorithme de représentation des données exogènes (sous forme de classes) dans le but de s'affranchir du contexte de vol et permet de faire la différence entre plusieurs phases stables pertinentes.

Le brevet EP2623747B1 propose un dispositif de contrôle pour réaliser automatiquement un contrôle de santé moteur d'un turbomoteur d'un aéronef comprenant une étape d'acquisition d' un paramètre (mécanique) de surveillance du turbomoteur avec contrôle de pilotage (la méthode détermine automatiquement si la phase en cours est appropriée pour faire un relevé de données et prévient le pilote que l'acquisition est en cours) et d'une étape d'évaluation de la santé du moteur par rapport à des paramètres de référence (mesurés sur banc d'essai ou théoriques). Le brevet décrit une invention basée sur des modèles physiques de fonctionnement moteur, dans des phases prédéfinies. En effet, l'invention décrite dans EP2623747B1 permet de détecter automatiquement les phases pertinentes et de pallier au manque de phases pertinentes au cours d'un vol.

Afin de pallier le manque de données en régime stabilisé d'une turbomachine d'un hélicoptère, il existe dans l'état de l'art des solutions permettant de surveiller l'état du moteur à partir autres indicateurs que les marges ou autres manières de traiter les données, moins orientées sur la modélisation physique.

Par exemple, le brevet EP2676176B1 propose une méthode de surveillance de moteur d'aéronef à partir de données endogènes (relatives au moteur) et exogènes (relatives à environnement) enregistrées pendant le vol. Chaque vol est standardisé par les variables exogènes pour avoir un contexte comparable entre les vols (voir par exemple FR3035232A1), puis compressé et projeté sur une carte auto-adaptative de Kohonen. Pour un vol d'intérêt, la carte est utilisée pour trouver un vol similaire du passé et analyser statistiquement l'éventuelle dérive de comportement moteur entre les deux. Dans le brevet EP2676176B1, la représentation des données de vol est utilisée pour chercher des données passées similaires aux données observées et analyses les dérives. La solution de EP2676176B1 se distingue par la recherche passive de dérive dans les données projetées et l'utilisation d'une seule méthode bien spécifique de représentation. Cette solution est plus précisément décrite dans le papier Aircraft engine health monitoring using Self-Organizing Maps, E. Côme, M. Cottrell, M. Verleysen, and J. Lacaille (2010).

En outre, la demande de brevet US20180297718A1 propose une méthode pour suivre la santé d'un turbomoteur. Le mécanisme est le suivant : acquisition de données initiales utilisées comme référence définissant le moteur sain, dans différentes phases d'utilisation ; acquisition de données pendant la vie l'appareil ; comparaison avec un module calculant une différence entre les paramètres « sains » et les nouveaux paramètres. Mise en place d'une alarme de maintenance. Utilisation de connaissance métier et de définition de l'état sain. Utilisation de dérive de paramètres physique par phase de vol.

Le document FR3095424A1 propose une méthode pour suivre la santé d'un moteur d'aéronef, dans laquelle des données acquises au cours d'un vol sont comparées à des données simulées. Afin de pouvoir utiliser le modèle physique de simulation dans un domaine plus étendu que son domaine de validité, un module d'apprentissage est utilisé pour prédire des marges en prenant en compte des vols antérieurs. Toutefois, le procédé décrit dans ce document ne reconstitue pas des données en régime stabilisé lorsqu'elles sont susceptibles d'être manquantes au cours d'un vol.

Une alternative aux solutions proposées ci-dessus également connue dans l'état de l'art, repose sur l'estimation, à partir de valeurs de paramètres d'entrées relatifs à la turbomachine en régime transitoire lors d'un vol donné, de valeurs de paramètres de sortie relatifs à la turbomachine en régime stabilisé. La solution permet de transformer deux paramètres relatifs à la turbomachine indépendamment l'un de l'autre afin d'obtenir des valeurs de paramètres de sortie en régime stabilisé pour des paramètres d'entrée donnés. Cependant, la solution proposée fonctionne uniquement pour une paire de paramètres (entrée, sortie) à la fois et chaque paramètre est transformé indépendamment de l'autre pour obtenir une paire de paramètres (entrée, sortie) en régime stabilisé. De plus, la marge ne peut donc être calculée que sur les paramètres transformés, et non pour n'importe quelle valeur des paramètres d'entrée, ce qui limite encore un calcul de marge pertinent.

Il existe donc un besoin d'estimer le comportement de la turbomachine en régime stabilisé, à partir d'un ou plusieurs paramètres d'entrée relatifs à la turbomachine en régime transitoire, sans considérer les paramètres d'entrées et sorties indépendamment les uns des autres, ni deux par deux.

### RESUME DE L'INVENTION

L'invention offre une solution aux problèmes évoqués précédemment, en permettant d'estimer plus efficacement le comportement en régime stabilisé d'une turbomachine pour un vol en particulier.

Un aspect de l'invention concerne un procédé de surveillance, mis en œuvre par ordinateur, de l'état de santé d'une turbomachine d'intérêt TMI d'aéronef pour un vol d'intérêt VI de l'aéronef, conformément à la revendication 1. A partir d'une matrice consigne X_{SC} comprenant au moins une valeur dite valeur consigne d'au moins un paramètre d'entrée relatif à la turbomachine d'intérêt TMI en régime stabilisé, l'au moins une valeur consigne correspondant à au moins une valeur souhaitée de l'au moins un paramètre d'entrée, le procédé comporte les étapes suivantes :
- Construction d'une base de données d'entrainement comprenant :
   -- un ensemble dit transitoire T comportant des données transitoires d'apprentissage comprenant des valeurs de l'au moins un paramètre d'entrée et des valeurs d'au moins un paramètre de sortie mesurées lors d'au moins un instant d'enregistrement de vol d'au moins un vol V d'au moins une turbomachine TM fonctionnant en régime transitoire et du vol d'intérêt de la turbomachine d'intérêt TMI, chaque paramètre de sortie étant lié à au moins un paramètre d'entrée de la turbomachine et à l'état de santé de la turbomachine ;
   -- un ensemble dit stabilisé S comportant des données stabilisées d'apprentissage comprenant des valeurs de l'au moins un paramètre d'entrée et des valeurs de l'au moins un paramètre de sortie mesurées lors de chaque instant d'enregistrement de vol de chaque vol V, à l'exception du vol d'intérêt VI, de chaque turbomachine TM fonctionnant en régime stabilisé ;
- Estimation d'un modèle de prédiction transitoire f sur les données transitoires d'apprentissage de l'ensemble transitoire T, le modèle de prédiction transitoire permettant de prédire des valeurs de l'au moins un paramètre de sortie à partir de valeurs de l'au moins un paramètre d'entrée en régime transitoire ;
- Estimation d'un modèle de prédiction stabilisée H à partir du modèle de prédiction transitoire f et des données stabilisées d'apprentissage comprises dans l'ensemble stabilisé S, le modèle de prédiction stabilisée permettant de prédire des valeurs de l'au moins un paramètre de sortie à partir de valeurs de l'au moins un paramètre d'entrée en régime stabilisé ;
- Estimation d'une matrice d'intérêt Y_{SI} représentant le comportement de la turbomachine d'intérêt TMI en régime stabilisé pour le vol d'intérêt VI, l'estimation étant réalisée à partir du modèle de prédiction stabilisée H, d'au moins une partie du modèle de prédiction transitoire f et de la matrice consigne X_{SC}, la matrice d'intérêt Y_{SI} comprenant au moins une valeur de l'au moins un paramètre de sortie attendue pour l'au moins une valeur consigne ;
- Estimation de l'état de santé de la turbomachine d'intérêt à partir d'un calcul de marge dépendant de la matrice d'intérêt Y_{SI}.

Le modèle f peut être constitué d'un ou plusieurs sous-modèles de prédiction transitoires spécifiques ou non à des jeux de données particuliers.

Le modèle de prédiction H peut être formé à partir d'un ou plusieurs modèles de prédiction stabilisée, décrits dans la suite.

Par "paramètre d'entrée relatif à une turbomachine" on entend un paramètre relatif à la turbomachine dont une valeur consigne est souhaitée.

Par " comportement d'une turbomachine en régime stabilisé pour un vol V " on entend l'estimation d'au moins un paramètre de sortie relatif à la turbomachine, un paramètre de sortie étant une conséquence d'un ou plusieurs paramètres d'entrées de la turbomachine et de l'état de la turbomachine.

Une marge est un indicateur physique métier, qui renseigne grâce au retour d'expérience et à la connaissance physique le service après-vente sur l'état des moteurs. Ainsi, la marge ainsi calculée (simulée/générée) par l'invention est soit affichée dans un outil de visualisation sur ordinateur et analysée par un opérateur, soit analysée dans un pipeline algorithmique dans un ordinateur afin d'un déduire formellement sa tendance, et alerter un opérateur sur l'état de santé du moteur surveillé. L'invention permet avantageusement de disposer de plus de points à analyser, compensant l'absence de données stabilisées, et donc, permettant une meilleure analyse visuelle par l'opérateur ou un meilleur calcul de tendance et donc une meilleure estimation de l'état de santé du moteur surveillé autre part.

Grâce à l'invention, le comportement en régime stabilisé d'une turbomachine d'intérêt, pour n'importe quel vol d'intérêt, peut être estimé à partir de données transitoires et stabilisées relatives à au moins une turbomachine en régime transitoire et stabilisé pour une pluralité de vols, grâce au modèle de prédiction stabilisée H. Ainsi, contrairement à l'état de l'art, l'invention ne permet pas seulement de prédire des données de sorties relatives à la turbomachine en régime stabilisé uniquement dans les conditions rencontrées mais un modèle permettant de prédire les données de sorties à partir de n'importe quelle consigne, l'estimation du modèle H permettant donc de calculer des marges en différents points plutôt que d'être contraint à une transformation des variables transitoires et donc de surveiller l'état de la turbomachine pour n'importe quel vol d'intérêt. Le calcul des marges en différents points permet de disposer de d'avantage de points d'analyse, et donc d'avoir une analyse plus précise et avec moins de bruit.

Avantageusement, l'invention permet de prendre en compte toutes les données relatives à la turbomachine d'un seul coup plutôt que par paires. Ainsi, la prise en compte de toutes les variables plutôt que des paires permet d'avoir un modèle plus fidèle à la réalité, et donc de diminuer les erreurs d'estimation. La diminution des erreurs d'estimation permet d'avoir des marges plus précises et pertinentes par rapport à l'analyse.

Avantageusement, l'invention permet la construction d'un modèle de prédiction stabilisée H_{VI} qui permet de calculer des marges en différents points plutôt que d'être contraint à une transformation des variables transitoires. La production de ce modèle donne une bien plus grande flexibilité dans l'exploitation des résultats. Ainsi, ce n'est pas une simple transformation de données mais bien une modélisation complète de la turbomachine qui est à disposition, permettant une analyse multi-points de fonctionnement.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :
- les données transitoires d'apprentissage de l'ensemble T sont construites, pour chaque vol V de chaque turbomachine TM, à partir d'un couple (*χ_{VT}*,ψ*_{VT}*):
   ∘ la matrice *χ_{VT},* comprenant au moins une ligne et au moins une colonne, chaque ligne correspondant à un paramètre d'entrée de la turbomachine TM en régime transitoire, chaque paramètre d'entrée de chaque ligne étant différent des autres paramètres d'entrée des autres lignes, chaque colonne correspondant à un instant d'enregistrement du vol V, chaque instant d'enregistrement de chaque colonne étant différent des autres instants d'enregistrements des autres colonnes,
   ∘ la matrice ψ*_{VT}*, comprenant au moins une ligne et au moins une colonne, chaque ligne correspondant à un paramètre de sortie de la turbomachine TM en régime transitoire, chaque paramètre de sortie de chaque ligne étant différent des autres paramètres d'entrée des autres lignes, chaque colonne correspondant à un instant d'enregistrement du vol V, chaque instant d'enregistrement de chaque colonne étant différent des autres instants d'enregistrements des autres lignes,
- les données stabilisées d'apprentissage de l'ensemble S sont construites, pour chaque vol V de chaque turbomachine TM, à l'exception du vol d'intérêt, à partir du couple (*χ_{VS}*,ψ*_{VS}*):
   ∘ la matrice *χ_{VS},* comprenant au moins une ligne et au moins une colonne, chaque ligne correspondant à un paramètre d'entrée de la turbomachine TM en régime transitoire, chaque paramètre d'entrée de chaque ligne étant différent des autres paramètres d'entrée des autres lignes, chaque colonne correspondant à un instant d'enregistrement du vol V, chaque instant d'enregistrement de chaque colonne étant différent des autres instants d'enregistrements des autres colonnes,
   o la matrice ψ*_{VS},* comprenant au moins une ligne et au moins une colonne, chaque ligne correspondant à un paramètre de sortie de la turbomachine TM en régime transitoire, chaque paramètre de sortie de chaque ligne étant différent des autres paramètres d'entrée des autres lignes, chaque colonne correspondant à un instant d'enregistrement du vol V, chaque instant d'enregistrement de chaque colonne étant différent des autres instants d'enregistrements des autres colonnes.
- la turbomachine TM est la turbomachine d'intérêt. Ainsi, Parmi les couples de matrices (*χ_{VT}, ψ_{VY}*) de l'ensemble transitoire T, au moins un de ces couples représente un vol de la turbomachine d'intérêt. Cette caractéristique permet d'inclure des données relatives à la turbomachine d'intérêt pour au moins un vol, permettant d'estimer le modèle de prédiction f, le modèle f permettant de déterminer le comportement pour un vol à partir de données récupérées sur la turbomachine d'intérêt. Cette étape permet d'intégrer le comportement actuel de la turbomachine considérée, et permet que le modèle ne soit pas un simple modèle abstrait mais bien un modèle du comportement de cette machine particulière, avec toutes les informations disponibles.
- Un vol V de l'ensemble T est le vol d'intérêt VI de la turbomachine d'intérêt et l'ensemble T est en outre construit à partir du couple (*χ_{VIT}, ψ_{VIT}*). Cette caractéristique d'inclure des paramètres relatifs à la turbomachine d'intérêt pour le vol d'intérêt, permettant d'estimer le modèle de prédiction f, permettant de représenter de la turbomachine d'intérêt pour le vol d'intérêt. Cette inclusion de ces données particulières permet d'obtenir un comportement du modèle représentatif de la réalité, et donc d'avoir des marges métier qui correspondent à la réalité, à savoir l'état réel de cette turbomachine.
- pour chaque vol V de chaque turbomachine TM de l'ensemble T :
   ∘ les données d'apprentissage transitoires de l'ensemble T comprennent le couple (*χ_{VT},*ψ*_{VT}*);
   ∘ le modèle de prédiction transitoire f est formé d'au moins un sous-modèle fᵥ, tel que fᵥ(χ*_{VT}*) = ψ*_{VT}*.
- Selon un mode de réalisation complémentaire au premier mode de réalisation, le modèle de prédiction stabilisée H est défini tel que, pour chaque vol V de chaque turbomachine TM de l'ensemble S, H(fv(χ*_{VS}*),χ*_{VS}*) = ψ*_{VS}*
- Selon un mode de réalisation, les données transitoires d'apprentissage de l'ensemble T comprennent :
   ∘ Une matrice *X_{T}* résultant d'une concaténation horizontale de chaque matrice χ*_{VT}*,
   ∘ Une matrice *Y_{T}* résultant de concaténation horizontale de chaque matrice ψ*_{VT},*
      Et le modèle de prédiction transitoire f est défini tel que f(*X_{T}*) *= Y_{T}.*
- les données stabilisées d'apprentissage de l'ensemble S comprennent :
   ∘ Une matrice *X_{S}* résultant d'une concaténation horizontale de chaque matrice *χ_{VS},*
   ∘ Une matrice *Y_{S}* résultant de concaténation horizontale de chaque matrice ψ*_{VS},*
      et le modèle de prédiction stabilisée H est défini tel que H(f(*X_{S}*)*,X_{S}*) *= Y_{S}.*
- l'estimation d'un modèle de prédiction stabilisée H à partir du modèle de prédiction transitoire f et des données stabilisées d'apprentissage comprises dans l'ensemble stabilisé S comprend les sous-étapes suivantes:
   ∘ Pour chaque vol V de chaque turbomachine TM, à l'exception du vol d'intérêt VI, estimation d'un modèle de prédiction stabilisée Hv à partir du modèle de prédiction transitoire f et des données stabilisées d'apprentissage de chaque instant d'enregistrement de vol du vol V, comprises dans l'ensemble stabilisé S;
   ∘ Construction d'un modèle de prédiction stabilisée H_{VI} pour le vol d'intérêt VI, à partir d'au moins un modèle de prédiction stabilisée Hc estimé pour un vol C, le vol C étant un vol parmi le ou les vols V;
   ∘ Le modèle de prédiction stabilisée H étant le modèle de prédiction stabilisée H_{VI}.
- pour chaque vol V de chaque turbomachine TM de l'ensemble stabilisé S, à l'exception du vol d'intérêt VI de la turbomachine d'intérêt TMI :
   ∘ les données stabilisées d'apprentissage de l'ensemble S comprennent le couple (χ*_{VS},* ψ*_{VS}* )
   ∘ le modèle de prédiction stabilisée Hv est défini tel que, Hv(*f*(χ*_{VS}*)*,* χ*_{VS}*) = ψ*_{VS}*
- le modèle de prédiction stabilisée H_{VI} est construit à partir d'au moins le modèle de prédiction stabilisée HC choisi selon une condition C1,
- la condition C1 est :
   ∘ La distance entre χ*_{CT}* et χ*_{VIT}* est minimale;
   ∘ La fonction coût du modèle de prédiction stabilisée H_{C} est minimale; ou
   ∘ L'erreur de généralisation du modèle de prédiction stabilisée H_{C} est minimale.

Le choix du modèle H, selon l'un des modes de réalisations précédents, dépend des données, plus particulièrement du niveau de bruit et de la quantité disponible de données.
- Le procédé comprend une étape de calcul de marge, la marge étant proportionnelle à la différence entre la matrice d'intérêt Y_{SI} et une matrice *Yₘₚ*, la matrice *Yₘₚ* étant la sortie d'un modèle physique représentatif du pire cas pour l'entrée X_{SC}.
- au moins un paramètre d'entrée relatif à une turbomachine est un paramètre de fonctionnement de la turbomachine parmi les suivants :
   ∘ Vitesse de rotation d'un premier arbre de la turbomachine ;
   ∘ Vitesse de rotation d'un deuxième arbre de la turbomachine;
   ∘ Température d'une chambre de combustion de la turbomachine
   ∘ Couple délivré par la turbomachine ;
   ∘ Tout autre paramètre thermodynamique pertinent
   ou un paramètre propre à l'environnement donné dans lequel est située la turbomachine parmi les suivants :
   ∘ Température de l'environnement donné ;
   ∘ Pression de l'environnement donné.
   ∘ Puissance de prélèvement
   ∘ Tout autre paramètre influençant le comportement thermodynamique de la turbomachine (par exemple, valve);
- au moins un paramètre de sortie relatif à une turbomachine est un paramètre de fonctionnement de la turbomachine parmi les suivants :
   ∘ Vitesse de rotation d'un premier arbre de la turbomachine ;
   ∘ Vitesse de rotation d'un deuxième arbre de la turbomachine;
   ∘ Température d'une chambre de combustion de la turbomachine;
   ∘ Couple délivré par la turbomachine ;
   ∘ Tout autre paramètre thermodynamique pertinent
   ou un paramètre propre à l'environnement donné dans lequel est située la turbomachine parmi les suivants :
   ∘ Température de l'environnement donné ;
   ∘ Pression de l'environnement donné.
   ∘ Puissance de prélèvement
   ∘ Tout autre paramètre influençant le comportement thermodynamique de la turbomachine (par exemple, valve)
- le modèle de prédiction f et le modèle de prédiction H sont choisis parmi les méthodes classiques de régression, par exemple, mais sans se limiter à, un réseau de neurones, un arbre de décision, une forêt aléatoire, un séparateur à vastes marges ou une régression polynomiale. aléatoire, un séparateur à vastes marges ou une régression linéaire.

Un autre aspect de l'invention concerne un produit programme d'ordinateur comprenant des instructions qui, lorsque le programme est exécuté par un ordinateur, conduisent celui-ci à mettre en œuvre le procédé selon l'invention.

Un autre aspect de l'invention concerne un support d'enregistrement lisible par ordinateur comprenant des instructions qui, lorsqu'elles sont exécutées par un ordinateur, conduisent celui-ci à mettre en œuvre le procédé selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 [Fig. 1] montre une représentation schématique d'un schéma synoptique du procédé selon l'invention ;
- La figure 2 [Fig. 2] est un exemple de données récupérées lors des vols suivants : (Vol 0,Vol 1,Vol 2,Vol VI) de la turbomachine d'intérêt.

### DESCRIPTION DETAILLEE

Les figures sont présentées à titre indicatif et nullement limitatif de l'invention.

Un premier aspect de l'invention concerne un procédé de surveillance de l'état de santé d'une turbomachine d'intérêt TMI d'aéronef pour un vol d'intérêt VI, à partir d'une matrice consigne X_{SC} comprenant au moins un paramètre d'entrée relatifs à la turbomachine d'intérêt TMI en régime stabilisé.

L'aéronef est par exemple un avion ou un hélicoptère.

On entend par "turbomachine" un système employant une turbine à gaz, dans laquelle un transfert d'énergie est réalisé entre une partie tournante et un gaz.

Les caractéristiques suivantes sont valables pour tout type de turbomachine dans le cadre de l'invention, y-compris la turbomachine d'intérêt.

Une turbomachine peut comprendre une chambre de combustion, un premier arbre, un deuxième arbre.

On entend par "arbre" un élément mécanique permettant de transmettre une puissance sous forme d'un couple et d'un mouvement de rotation.

Une turbomachine est par exemple un turboréacteur, un turbopropulseur ou de préférence un turbomoteur.

Par "paramètre d'entrée relatif à une turbomachine" on entend un paramètre relatif à la turbomachine dont une valeur consigne est souhaitée.

Un paramètre d'entrée relatif à la turbomachine peut être un paramètre de fonctionnement de la turbomachine parmi les suivants : vitesse de rotation du premier arbre de la turbomachine; vitesse de rotation du deuxième arbre de la turbomachine; température de la chambre de combustion de la turbomachine d'intérêt; et couple délivré par la turbomachine, puissance délivrée par la turbomachine. Le paramètre d'entrée relatif à la turbomachine peut en outre être un paramètre propre à l'environnement extérieur dans lequel est situé l'aéronef comprenant la turbomachine lors d'un vol donné, parmi les paramètres suivants : température de l'environnement extérieur; pression de l'environnement extérieur. Un paramètre d'entrée relatif à la turbomachine peut également tout paramètre thermodynamique pertinent ou d'environnement pertinent

Par exemple, deux paramètres d'entrées peuvent être choisis parmi les paramètres relatifs à la turbomachine précédemment : une valeur consigne de la puissance délivrée par la turbomachine et une valeur consigne de la vitesse de rotation du premier arbre de la turbomachine peuvent être choisis ou requis.

Un paramètre de sortie de la turbomachine est un paramètre qui est une conséquence d'un ou plusieurs paramètres d'entrées de la turbomachine et de l'état de la turbomachine.

Au moins un paramètre de sortie relatif à la turbomachine d'intérêt peut être un paramètre de fonctionnement de la turbomachine parmi les suivants : la vitesse de rotation du premier arbre de la turbomachine; la vitesse de rotation du deuxième arbre de la turbomachine; la température de la chambre de combustion de la turbomachine, couple délivré par la turbomachine et puissance délivrée par la turbomachine.

Par exemple si les paramètres d'entrées sont : la vitesse de rotation du premier arbre de la turbomachine, la vitesse de rotation du deuxième arbre de la turbomachine la température de l'environnement extérieur donné; la pression de l'environnement extérieur donné, les paramètres de sortie relatifs à la turbomachine peuvent être la température de la chambre de combustion de la turbomachine, et couple délivré par la turbomachine.

Dans la suite de la rédaction, la phrase "paramètres relatifs à la turbomachine" comprend le ou les paramètres d'entrées relatifs à la turbomachine et les paramètres de sortie relatifs à la turbomachine.

Par "régime stabilisé d'une turbomachine " on entend un régime durant lequel les paramètres d'entrée et les paramètres de sortie relatifs à la turbomachine n'évoluent pas ou très peu dans le temps. Un régime stabilisé peut être appelé régime permanent ou régime stationnaire.

Un régime stabilisé d'une turbomachine s'oppose à un régime transitoire d'une turbomachine, durant lequel des paramètres d'entrées et des paramètres de sorties relatifs à la turbomachine évoluent dans le temps.

La matrice consigne X_{SC} est une matrice comprenant au moins une valeur d'au moins un paramètre d'entrée relatif à la turbomachine d'intérêt en régime stabilisé, chaque valeur pouvant être générée aléatoirement ou choisie. La matrice X_{SC} peut avoir un nombre de lignes supérieur ou égal à 1 et un nombre de colonnes supérieur ou égale à 1. Les coefficients de la matrice X_{SC} sont notés (x^{SC}_{i,j})_{i≥0}, _{j≥0}.

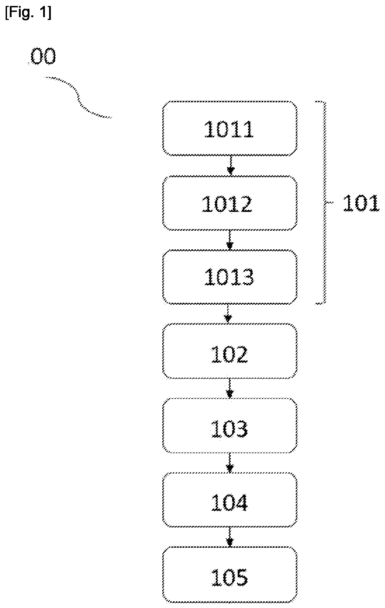

La figure 1 [Fig. 1] est un schéma synoptique du procédé 100 selon l'invention.

Le procédé 100 peut comprendre une première étape 101 de construction d'une base de données d'entrainement.

L'étape 101 de construction peut comprendre une première sous-étape 1011 de récupération de données D, pour au moins une turbomachine TM, les données D étant enregistrées durant un ou plusieurs instants d'enregistrements de vol durant au moins un vol V de ladite turbomachine TM.

Selon un mode de réalisation la turbomachine TM est la turbomachine d'intérêt TMI.

Selon un mode de réalisation, les données D comportent des données enregistrées durant un ou plusieurs instants de vol d'une pluralité de vols (V₀, ... V_{N})_{N>0} d'une même turbomachine.

Selon un mode de réalisation, les données D comprennent des données enregistrées, pour une pluralité de turbomachines (TM₀, ...TMₖ) _{K>1} durant un ou plusieurs instants d'enregistrement de vol d'une pluralité de vols (V_{0-TM₀}, ... V_{N-TM₀}, V₀-_{TMK}.... V_{P-TMK})_{P>1} d'une pluralité de turbomachines. Pour chaque turbomachine de la pluralité de turbomachine, le nombre d'instants de vols de chaque vol de la pluralité de vols peut être différent ou égal d'un vol à l'autre et/ou d'une turbomachine à l'autre.

Selon un mode de réalisation dans lequel la turbomachine TM est la turbomachine d'intérêt TMI, le vol V effectué par la turbomachine d'intérêt est effectué antérieurement au vol d'intérêt VI.

Les données D récupérées comprennent, pour chaque turbomachine TM et pour chaque vol V de la turbomachine TM, des données transitoires enregistrées durant le régime transitoire de la turbomachine TM durant au moins un instant de vol de chaque vol V de la turbomachine TM, le vol V pouvant être le vol d'intérêt VI, et comprennent des données stabilisées enregistrées durant le régime stabilisé de la turbomachine TM durant au moins un instant de vol de chaque vol V, à l'exception du vol d'intérêt VI, de la turbomachine TM.

Selon un mode de réalisation, pour chaque turbomachine TM et Pour chaque vol donné V de la turbomachine TM les données transitoires comprennent un couple de matrices ( χ*_{VT}*, *ψ_{VT}*).

Selon le mode de réalisation précédent, chaque matrice *χ_{VT}* comprend au moins une ligne et au moins une colonne, chaque ligne correspondant à un paramètre d'entrée de la turbomachine TM, chaque paramètre d'entrée de chaque ligne étant différent des autres paramètres d'entrée des autres lignes, et chaque colonne correspondant à un instant d'enregistrement du vol V lors d'une phase transitoire, chaque instant d'enregistrement de chaque colonne étant différent des autres instants d'enregistrements des autres colonnes.

Soit x^{T}_{V_ij} un coefficient de la matrice *χ_{VT},* x^{T}_{V_ij} étant égal à la valeur du paramètre d'entrée i pour l'instant d'enregistrement j pendant des phases dites transitoires du vol donné V. Les coefficients i et j sont respectivement des entiers naturels supérieurs ou égaux à 0. L'index V représente le vol donné V et l'index T représente le régime transitoire.

Par exemple, pour un vol V d'une turbomachine TM en régime transitoire, pour laquelle les valeurs de p paramètres d'entrée relatifs à la turbomachine TM sont mesurées, p étant un entier supérieur à 0, les valeurs étant mesurées pour | enregistrements d'instants de vols, | étant supérieur à 0, la matrice *χ_{VT}* est la suivante :
${χ}_{VT} = \left[\begin{matrix}{{x}^{T}}_{V _ 00} & ⋯ & {{x}^{T}}_{V _ 0 l} \\ ⋮ & ⋱ & ⋮ \\ {{x}^{T}}_{V _ p 0} & ⋯ & {{x}^{T}}_{V _ pl}\end{matrix}\right]$

Selon le mode de réalisation précédent, chaque matrice *ψ_{VT},* comprend au moins une ligne et au moins une colonne, chaque ligne correspondant aux différents paramètres de sortie de la turbomachine TM en régime transitoire, chaque colonne correspondant aux différents instants d'enregistrement du vol v lors d'une phase transitoire.

Soit y^{T}_{V_ij} un coefficient de la matrice *ψ_{VT}* y^{T}_{V-ij} la valeur du paramètre de sortie i pour l'instant d'enregistrement j pendant des phases dites transitoires du vol donné V. Les coefficients i et j sont respectivement des entiers naturels supérieurs ou égaux à 0. L'index V représente le vol donné V et l'index T représente le régime transitoire.

Par exemple, pour un vol V d'une turbomachine TM en régime stabilisé, pour laquelle les valeurs de q paramètres d'entrée relatifs à la turbomachine TM sont mesurées, q étant un entier supérieur à 0, les valeurs étant mesurées pour | enregistrements d'instants de vols, | étant supérieur à 0, la matrice *ψ_{VT}* est la suivante
${ψ}_{VS} = \left[\begin{matrix}{{y}^{T}}_{V _ 00} & ⋯ & {{y}^{T}}_{V _ 0 l} \\ ⋮ & ⋱ & ⋮ \\ {{y}^{T}}_{V _ q 0} & ⋯ & {{y}^{T}}_{V _ ql}\end{matrix}\right]$

Pour chaque vol V de la turbomachine TM, les instants d'enregistrement de vol de *χ_{VT}* correspondant aux instants d'enregistrement de *ψ_{VT}*.

Selon un mode de réalisation, les données transitoires comprennent, pour chaque vol V de chaque turbomachine TM, les matrices (*χ_{VT}*)^{t} et (*ψ_{VT}*)^{t}, (*χ_{VT}*)^{t} étant la transposée de la matrice *χ_{VT}* et (*ψ_{VT}*)^{T} étant la transposée de la matrice *ψ_{VT}*.

Selon un mode de réalisation complémentaire au mode de réalisation précédent, pour chaque turbomachine TM et pour chaque vol donné V de la turbomachine TM, à l'exception du vol d'intérêt VI de la turbomachine d'intérêt, les données stabilisées comprennent un couple de matrices (*χ_{VS}*, *ψ_{VS}*)*.*

Chaque matrice *χ_{VS}* comprend au moins une ligne et au moins une colonne, chaque ligne correspondant à un paramètre d'entrée de la turbomachine TM, chaque paramètre d'entrée de chaque ligne étant différent des autres paramètres d'entrée des autres lignes, et chaque colonne correspondant à un instant d'enregistrement du vol V en phase stabilisée, chaque instant d'enregistrement de chaque colonne étant différent des autres instants d'enregistrements des autres colonnes.

Soit x^{S}_{V_ij} un coefficient de la matrice *χ_{VS},* x^{S}_{V_ij} étant égal à la valeur du paramètre d'entrée i pour l'instant d'enregistrement j pendant des phases dites stabilisées du vol donné V. Les coefficients i et j sont respectivement des entiers naturels supérieurs ou égaux à 0. L'index V représente le vol donné V et l'index T représente le régime transitoire.

Par exemple, pour un vol V d'une turbomachine TM en régime stabilisé, pour laquelle les valeurs de p paramètres d'entrée relatifs à la turbomachine TM sont mesurées, p étant un entier supérieur à 0, les valeurs étant mesurées pour r enregistrements d'instants de vols, r étant supérieur à 0, la matrice *χ_{VS}* est la suivante :
${χ}_{VS} = \left[\begin{matrix}{{x}^{S}}_{V _ 00} & ⋯ & {{x}^{S}}_{V _ 0 r} \\ ⋮ & ⋱ & ⋮ \\ {{x}^{S}}_{V _ p 0} & ⋯ & {{x}^{S}}_{V _ pr}\end{matrix}\right]$

Chaque matrice *ψ_{VS}*, chacune comprenant au moins une colonne et au moins une ligne, chaque ligne correspondant aux différents paramètres de sortie de la turbomachine TM en régime transitoire, chaque colonne correspondant aux différents instants d'enregistrement du vol v.

Soit y^{S}_{V_ij} un coefficient de la matrice *ψ_{VS},* y^{S}_{V_ij} la valeur du paramètre de sortie i pour l'instant d'enregistrement j pendant des phases dites transitoires du vol donné V. Les coefficients i et j sont respectivement des entiers naturels supérieurs ou égaux à 0. L'index V représente le vol donné V et l'index T représente le régime transitoire.

Par exemple, pour un vol V d'une turbomachine TM en régime stabilisé, pour laquelle les valeurs de q paramètres d'entrée relatifs à la turbomachine TM sont mesurées, q étant un entier supérieur à 0, les valeurs étant mesurées pour r enregistrements d'instants de vols, r étant supérieur à 0, la matrice *ψ_{VS}* est la suivante :
${ψ}_{VS} = \left[\begin{matrix}{{y}^{S}}_{V _ 00} & ⋯ & {{y}^{S}}_{V _ 0 r} \\ ⋮ & ⋱ & ⋮ \\ {{y}^{S}}_{V _ q 0} & ⋯ & {{y}^{S}}_{V _ q r}\end{matrix}\right]$

Pour chaque vol V de chaque turbomachine TM, les instants d'enregistrement de vol de *χ_{VS}* correspondant aux instants d'enregistrement de *ψ_{VS}*.

Selon le mode de réalisation dans lequel les données D comprennent des données transitoires enregistrées pour la turbomachine d'intérêt TM_{I} durant au moins un instant de vol du vol d'intérêt VI, lesdites données transitoires comprennent des matrices χ*_{VIT}* et *ψ*_{VIT}.

Selon un mode de réalisation complémentaire avec le mode de réalisation précédent, pour chaque turbomachine TM, et pour chaque vol donné V de la turbomachine TM, la distance entre les matrices χ*_{VIT} et χ_{VT}* est inférieure à un seuil S1.

Selon un mode de réalisation compatible (mais non exclusif) avec le mode de réalisation précédent, la distance entre les matrices *ψ*_{VIT} et *ψ*_{VT} est inférieure à un seuil S2.

La distance entre les matrices peut être n'importe quelle distance pertinente, par exemple une distance de Manhattan, une distance euclidienne, une distance de Minkowski ou une distance de Tchebychev.

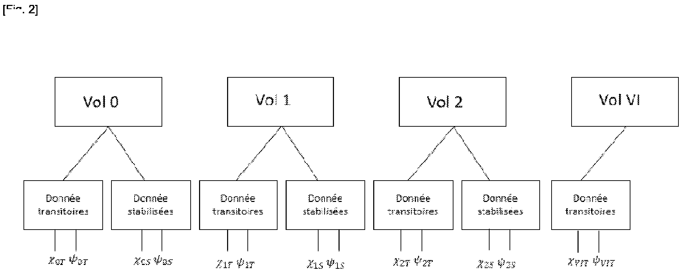

La figure 2 [Fig. 2] est un exemple de données récupérées lors des vols suivants : (Vol 0,Vol 1,Vol 2,Vol VI) de la turbomachine d'intérêt.

La première étape 101 du procédé selon l'invention comprend une deuxième sous-étape 1012 de répartition des données D dans deux ensembles : un ensemble dit transitoire T et un ensemble dit stabilisé S. Les données transitoires, pour chaque turbomachine TM et pour chaque vol V de la turbomachine TM sont utilisées pour construire des données d'apprentissage transitoires comprises dans l'ensemble T, et les données stabilisées pour chaque turbomachine TM et pour chaque vol V de la turbomachine TM sont utilisées pour construire des données d'apprentissage stabilisées. sont réparties dans l'ensemble S.

Selon un mode de réalisation, les données d'apprentissage transitoires de l'ensemble T sont construites, pour chaque vol V de chaque turbomachine TM, le vol V pouvant être le vol d'intérêt VI, à partir du couple (*χ_{VT},ψ_{VT}*).

Selon le mode de réalisation précédent, les données d'apprentissage transitoires de l'ensemble S sont construites, pour chaque vol V de chaque turbomachine TM, à l'exception du vol d'intérêt VI, à partir du couple (*χ_{VS}*,*ψ_{VS}*).

Selon un premier sous-mode de réalisation complémentaire au mode de réalisation précédent, les données d'apprentissage transitoires de l'ensemble T comprennent, pour chaque turbomachine TM, et pour chaque vol V, le couple de matrices (*χ_{VT},ψ_{VT}*), le vol V pouvant être le vol d'intêret VI.

Selon le premier sous-mode de réalisation, les données stabilisées d'apprentissage de l'ensemble S comprennent, pour chaque turbomachine TM, et pour chaque vol V, à l'exception du vol d'intérêt VI de la turbomachine d'intérêt, le couple de matrices (*χ_{VS}, ψ_{VS}*).

Par exemple, si les données D enregistrées comportent des données des vols (V1,V2) d'une turbomachine TM, l'ensemble T peut comprendre les couples de matrices suivants : (*χ*_{*V*1T}*, ψ*_{*V*1*T*}), (*χ*_{*V*2T}*, ψ*_{*V*2*T*}) et l'ensemble S peut comprendre les couples de matrices suivantes : (*χ*_{*V*1*S*}, *ψ*_{*V*1*S*}), (*X_{V2S}, ψ*_{*V*2*S*}) .

Par exemple, si les données D enregistrées comportent des données enregistrées lors des vols (V1, V2, VI), de la turbomachine d'intérêt TMI l'ensemble T peut comprendre les couples de matrices suivants : (*χ*_{*V*1T}, *ψ*_{*V*1*T*}), (*χ*_{*V*2T}, *ψ*_{*V*2*T*}) et (*χ_{VIT}*, *ψ_{VIT}*) et l'ensemble S peut comprendre les couples de matrices suivantes : (*χ*_{*V*1}*_{S}, ψ*_{*V*1*S*}), (*χ*_{*V*2*S*}, *ψ_{V2S}*)*.*

Selon un deuxième sous-mode complémentaire au mode de réalisation précédent, mode de les données d'apprentissage transitoires de l'ensemble T comprennent un couple de matrices (*X_{T}, Y_{T}*) construit à partir de chaque couple (*χ_{VT},Ψ_{VT}*) pour chaque vol V de chaque turbomachine TM.

Selon le deuxième sous-mode de réalisation, les données d'apprentissage stabilisées de l'ensemble S comprennent un couple de matrices (*X_{S}, Y_{S}*) construit à partir de chaque couple (*χ_{VS},ψ_{VS}*) pour chaque vol V de chaque turbomachine TM, à l'exception du vol d'intérêt VI.

Selon le deuxième sous-mode de réalisation, la matrice *X_{T}* résulte de la concaténation horizontale de chaque matrice *χ_{VT}.* Ainsi, lorsque les données D comprennent des données transitoires enregistrées pour au moins un enregistrement d'un instant de vol d'une pluralité de vols (V₀,...,Vₖ)_{k>0}, la matrice *X_{T}* est de la forme suivante :
${X}_{T} = \left[{χ}_{0 T} … {χ}_{kT}\right]$

Afin de simplifier les notations, chaque vol Vₖ a été noté k dans la matrice *X_{T}.*

Selon le deuxième sous-mode de réalisation précédent, la matrice *Y_{T}* résulte de la concaténation horizontale de chaque matrice *ψ_{VT}*.

Ainsi, lorsque les données D comprennent des données transitoires enregistrées pour au moins un enregistrement d'un instant de vol d'une pluralité de vols (V₀,...,Vₖ)_{k>0}, la matrice *Y_{T}* est de la forme suivante :
${Y}_{T} = \left[{ψ}_{0 T} … {ψ}_{kT}\right]$

Afin de simplifier les notations, chaque vol Vₖ a été noté k dans la matrice *Y_{T}.*

Chaque colonne de *X_{T}* et *Y_{T}* représente un même vol V.

Selon le deuxième sous-mode de réalisation, la matrice *X_{S}* résulte de la concaténation horizontale de chaque matrice *χ_{VS}.* Ainsi, lorsque les données D comprennent des données transitoires enregistrées pour au moins un instant de vol d'une pluralité de vols (V₀,...,V_{N})_{N>0}, la matrice *X_{S}* est de la forme suivante :
${X}_{S} = \left[{χ}_{0 S} … {χ}_{NS}\right]$

Afin de simplifier les notations, chaque vol V_{N} a été noté N dans la matrice *X_{S}.*

Selon le deuxième sous-mode de réalisation, la matrice *Y_{S}* résulte de la concaténation horizontale de chaque matrice *ψ_{VS}*

Ainsi, lorsque les données D comprennent des données transitoires enregistrées pour au moins un enregistrement d'un instant de vol d'une pluralité de vols (V₀,...,V_{N})_{N>0}, la matrice *Y_{S}* est de la forme suivante :
${Y}_{S} = \left[{ψ}_{0 S} … {ψ}_{NS}\right]$

Afin de simplifier les notations, chaque vol V_{N} a été noté N dans la matrice *Y_{S}.*

Chaque ligne des matrices de *X_{T}* et de *X_{S}* représente un même paramètre d'entrée relatif à une turbomachine TM, et chaque ligne des matrices *Y_{T}* et *Y_{S}* représentant un même paramètre de sortie relatif à la turbomachine TM.

Le procédé comprend en outre une deuxième étape d'estimation 102 d'un modèle de prédiction transitoire f sur les données d'apprentissage de l'ensemble transitoire T.

Selon un premier mode de réalisation, dans lequel les données d'apprentissage transitoires de l'ensemble T comprennent, pour chaque vol V de chaque turbomachine TM, un couple de matrices (*χ_{VT},Ψ_{VT}*)*,* le modèle de prédiction transitoire est formé, d'au moins un sous-modèle de prédiction transitoire f_{V} tel que fᵥ(*χ_{VT}*)*= ψ_{VT}* et l'étape d'estimation 102 est réalisée grâce à l'estimation de chaque modèle fᵥ.

Ainsi, lorsque les données d'apprentissages transitoires de l'ensemble T comprennent une pluralité de couples de matrices ( (*χ*_{*V*0*T*},*ψ*_{*V*0*T*}),*....* (*χ_{VKT}*,*ψ_{VKT}*)) _{k>0} pour les vols (V₀, ... V_{K}) _{k>0} d'au moins une turbomachine TM, le modèle de prédiction transitoire f peut être formé à partir des sous-modèles (f_{V0},...f_{V}K) _{k>0}, Cette formation à partir des sous-modèles permet de réduire l'effet du bruit dans les données, et de capitaliser sur les similarités de fonctionnement transitoire des différentes turbomachines TM.En particulier, selon un mode de réalisation selon lequel l'ensemble T comprend le couple (*χ_{VIT}*,*ψ_{VIT}*), le modèle de prédiction transitoire f est formé d'au moins le sous-modèle de prédiction transitoire f_{VI}, pour le vol d'intérêt VI.

Selon un premier sous-mode de réalisation du premier mode de réalisation, chaque sous-modèle de prédiction transitoire fᵥ pour chaque vol V de l'ensemble transitoire T est estimé indépendamment des autres sous-modèles de prédiction transitoire. En particulier, lorsque l'ensemble T comprend le couple de matrices (*χ_{VIT},ψ_{VIT}*) correspondant au vol d'intérêt VI de la turbomachine d'intérêt TM_{I}, et le modèle de prédiction transitoire f est formé à partir d'au moins le sous modèle f_{VI}.
Selon le premier mode de réalisation, chaque modèle de prédiction transitoire fᵥ peut être un modèle choisi parmi tous les modèles de régression classique, par exemple un réseau de neurones, un arbre de régression, une forêt aléatoire, un séparateur à vastes marges ou une régression linéaire.

Selon un deuxième sous-mode de réalisation du premier mode de réalisation, chaque sous-modèle de prédiction transitoire fᵥ pour chaque vol V de l'ensemble transitoire T est estimé dépendamment des autres sous-modèles de prédiction transitoire grâce à une méthode d'apprentissage multi-tâches. Cet apprentissage multi-tâches permet de réduire le bruit dans les données et de couvrir toutes les parties de données vues par chaque transitoire, plutôt qu'un ensemble réduit. Cette couverture agrandie est ce qui permet en sortie de l'invention d'évaluer les marges sur de nombreux points de fonctionnement et donc d'avoir une analyse plus fine et précise des marges de la turbomachine considérée..

L'apprentissage multi-tâches est un sous-domaine de l'apprentissage automatique permettant de résoudre simultanément plusieurs tâches différentes tout en prenant en compte les dépendances entre les tâches. Un modèle d'apprentissage multi-tâches comprend une partie commune à chaque tâche et une partie propre à chaque tâche. L'apprentissage multitâche permet d'améliorer l'apprentissage d'un modèle particulier en utilisant les caractéristiques comprises dans toutes les tâches. Ainsi, selon le deuxième mode de réalisation, pour chaque vol V de chaque turbomachine TM, chaque sous-modèle de prédiction f_{V} est égal à φ o F_{V}, la fonction φ étant commune à chaque modèle f_{V} et la fonction Fv étant propre à chaque sous-modèle fv.

Le modèle d'apprentissage multitâche peut être un modèle choisi parmi un réseau de neurones, un arbre de régression, une forêt aléatoire, un séparateur à vastes marges ou une régression linéaire.

Par exemple, Chaque sous-modèle de prédiction f_{V} peut être associé à un ensemble de paramètres d'entrainement, dont une partie est commune à tous les autres sous-modèles de prédiction, et une partie propre audit modèle.

Selon le premier mode de réalisation, l'estimation de chaque modèle de prédiction transitoire fᵥ est réalisé en minimisant une fonction de coût correspondant à l'erreur entre la donnée de sortie fᵥ (*χ_{VT}*) fournie par le modèle de prédiction transitoire f et la vraie donnée de sortie *ψ_{VT}* souhaitée.

Selon le premier mode de réalisation, pour chaque vol V, la fonction coût est par exemple l'écart quadratique moyen entre fᵥ(*χ_{VT}*) et *ψ_{VT}*. Pour rappel, les coefficients de la matrice *χ_{VT}* sont notés (x^{T}_{v_ij}) _{i0, j≥0} et les coefficients de la matrice *ψ_{VY}* sont notés (y^{T}_{v_ij}) _{i≥0, j≥0}. On notera (f(x^{T}_{V_ij})) _{i≥0, j≥0} les coefficients de la matrice fᵥ(*χ_{VT}*). Ainsi, la fonction coût peut être égale à : ${\sum }_{j} {\sum }_{j} \left({y}_{v_ij}^{T}-{\left({f}_{v}\left({x}_{v_ij}^{T}\right)\right)}^{2}\right.$.

La minimisation de la fonction coût peut être réalisée grâce à l'algorithme de descente du gradient ou grâce à l'algorithme des moindres carrés ou n'importe quelle méthode d'optimisation de l'estimation de chaque sous-modèle fᵥ de l'état de l'art.

Selon un deuxième mode de réalisation, dans lequel l'ensemble T comprend la matrice *X_{T}* et la matrice *Y_{T},* l'étape d'estimation 102 du modèle de prédiction transitoire f modélise la relation entre la matrice *X_{T}* et la matrice *Y_{T}* tel que f(*X_{T}*) *= Y_{T},* f est dit modèle de prédiction transitoire global dans ce mode de réalisation.

Selon le deuxième mode de réalisation, le modèle de prédiction transitoire f peut être un modèle choisi parmi tous les modèles de régression classique, par exemple un réseau de neurones, un arbre de régression, une forêt aléatoire, un séparateur à vastes marges ou une régression linéaire.

Selon le deuxième mode de réalisation, l'estimation du modèle de prédiction transitoire f est réalisé en minimisant une fonction de coût correspondant à l'erreur entre la donnée de sortie f(*X_{T}*) fournie par le modèle de prédiction transitoire f et la vraie donnée de sortie *Y_{T}* souhaitée.

Selon le deuxième mode de réalisation, la fonction coût est par exemple l'écart quadratique moyen entre f(*X_{T}*) et *Y_{T}*. Pour rappel, la matrice *X_{T} peut être* égale aux colonnes (*χ_{VT}*)_{V≥1} On notera (f(x^{T}_{V_ij})) _{i≥0, j≥0 v≥0} les coefficients de la matrice *f*(*X_{T}*). Ainsi, la fonction coût peut être égale à : ${\sum }_{j} {\sum }_{j} \left({y}_{v_ij}^{T}-{\left(f\left({x}_{v_ij}^{T}\right)\right)}^{2}\right.$.

Ainsi, le modèle de prédiction transitoire f peut être défini tel que, pour chaque vol V de chaque turbomachine TM, f est formé d'au moins un sous-modèle fv défini tel que fᵥ(*χ_{VT}*) =*ψ_{VT}* ou peut être défini tel que f(*X_{T}*) *= Y_{T}.*

Le procédé 100 comprend en outre une étape d'estimation 103 d'un modèle de prédiction stabilisée H, en fonction du modèle transitoire f et de l'ensemble S.

Selon un premier mode de réalisation dans lequel le modèle transitoire f est formé d'au moins un sous-modèle transitoire fᵥ pour chaque vol V de l'ensemble transitoire T, le modèle de prédiction stabilisée H est défini, pour chaque vol V de l'ensemble S, représenté par le couple de matrices (*ψ_{VS}*,*χ_{VS}*), tel que H(fᵥ(*χ_{VS}*),*χ_{VS}*)*= ψ_{VS}*.

Selon le premier mode de réalisation, l'étape d'estimation 103 du modèle de prédiction stabilisée H est réalisée en minimisant une fonction coût, la fonction coût étant par exemple égale à : ${\sum }_{V} {\sum }_{i} {\sum }_{j} {\left({y}_{{V}_{_ ij}}^{S}-H\left({f}_{V}\left({x}_{{v}_{_ ij}}^{S}\right),{x}_{{V}_{_ ij}}^{S}\right)\right)}^{2}$. L'indice V représente chaque vol de l'ensemble S, l'indice i représente un instant de vol du vol V et l'indice j représente un paramètre d'entrée d'une turbomachine TM pour un coefficient ${x}_{{V}_{_ ij}}^{S}$ et j représente un paramètre de sortie de la même turbomachine TM pour un coefficient ${y}_{{V}_{_ ij}}^{S}$.

La minimisation de la fonction coût peut être réalisée grâce à l'algorithme de descente du gradient ou grâce à l'algorithme des moindres carrés ou n'importe quelle méthode d'optimisation de l'état de l'art.

Selon un deuxième mode de réalisation, selon lequel l'ensemble transitoire T comprend les matrices *X_{T}* et *Y_{T} et* l'ensemble stabilisé S comprend les matrices *X_{S}* et *Y_{S}* et selon lequel le modèle de prédiction transitoire f est défini tel que f(*X_{T}*) *= Y_{T},* le modèle de prédiction stabilisée H est défini tel que *Y_{S} =* H(f(*X_{S}*),*X_{S}*).

Selon le deuxième mode de réalisation, l'estimation du modèle de prédiction stabilisée H est réalisée en minimisant une fonction coût, la fonction coût étant par exemple égale à : ${\sum }_{V} {\sum }_{i} {\sum }_{j} {\left({y}_{{V}_{_ ij}}^{S}-H\left(f\left({x}_{{v}_{_ ij}}^{S}\right),{x}_{{V}_{_ ij}}^{S}\right)\right)}^{2}$. L'indice V représente chaque vol de l'ensemble S, l'indice i représente un instant de vol du vol V et l'indice j représente un paramètre d'entrée d'une turbomachine TM pour un coefficient ${x}_{{V}_{_ ij}}^{S}$ et j représente un paramètre de sortie de la même turbomachine TM pour un coefficient ${y}_{{V}_{_ ij}}^{S}$. La minimisation de la fonction coût peut être réalisée grâce à l'algorithme de descente du gradient ou grâce à l'algorithme des moindres carrés ou n'importe quel méthode d'optimisation de l'état de l'art.

Le modèle de prédiction H peut être un modèle choisi parmi un réseau de neurones, un arbre de régression, une forêt aléatoire, un séparateur à vastes marges ou une régression linéaire, mais pas exclusivement.

Selon un autre mode de réalisation, selon lequel l'ensemble transitoire T comprend les matrices *X_{T}* et *Y_{T}* et l'ensemble stabilisé S comprend les matrices *X_{S}* et *Y_{S}* et selon lequel le modèle de prédiction transitoire f est défini tel que f(*X_{T}*) *= Y_{T}* l'étape d'estimation 103 du modèle de prédiction stabilisée H comprend, pour chaque vol V de chaque turbomachine TM, à l'exception du vol d'intérêt VI, une étape d'estimation d'un modèle de prédiction stabilisée Hv à partir du modèle de prédiction transitoire f et des données stabilisées d'apprentissage de chaque instant d'enregistrement de vol V, comprises dans l'ensemble stabilisé S.

Selon un premier mode de réalisation, chaque sous-modèle de prédiction stabilisée Hᵥ pour chaque vol V de l'ensemble stabilisé S est estimé indépendamment des autres modèles de prédiction stabilisé.

Chaque modèle de prédiction stabilisée Hᵥ peut être un modèle choisi parmi tous les modèles de régression classique, par exemple un réseau de neurones, un arbre de régression, une forêt aléatoire, un séparateur à vastes marges ou une régression linéaire. La régression linéaire peut être une régression polynomiale par exemple.

Dans un premier mode de réalisation, l'estimation de chaque modèle de prédiction stabilisée Hᵥ est réalisé en minimisant une fonction de coût correspondant à l'erreur entre la donnée de sortie Hv (f(*χ_{VS}*), *χ_{VS}*) fournie par le modèle de prédiction stabilisée Hv et la vraie donnée de sortie *ψ_{VS}* souhaitée.

Selon un mode de réalisation compatible avec le premier mode de réalisation précédent, pour l'estimation de chaque modèle de prédiction stabilisée Hv, la fonction coût est par exemple l'écart quadratique moyen entre Hv (f(*χ_{VS}*),*χ_{VS}*) et *ψ_{VS}*. Pour rappel, les coefficients de la matrice *χ_{VS}* sont notés (x^{T}_{v_ij}) _{i0, j≥0} et les coefficients de la matrice *ψ_{VS}* sont notés (y^{T}_{v_ij}) _{i≥0, j≥0}. On notera (f(x^{S}_{V_ij})) _{i≥0, j≥0} les coefficients de la matrice fᵥ(*χ_{VS}*). Ainsi, la fonction coût peut être égale à : ${\sum }_{j} {\sum }_{j} \left({y}_{{v}_{ij}}^{S}-{\left({H}_{V}\left(f\left({x}_{{v}_{ij}}^{S}\right),{x}_{{v}_{ij}}^{S}\right)\right)}^{2}\right.$.

La minimisation de la fonction coût peut être réalisée grâce à l'algorithme de descente du gradient ou grâce à l'algorithme des moindres carrés ou n'importe quelle méthode d'optimisation de l'état de l'art permettant l'estimation de chaque sous-modèle Hᵥ

Dans un deuxième mode de réalisation, chaque modèle de prédiction stabilisée Hᵥ pour chaque vol V de l'ensemble transitoire S est estimé dépendamment des autres modèles de prédiction stabilisé grâce à une méthode d'apprentissage multi-tâches.

L'apprentissage multi-tâches est un sous-domaine de l'apprentissage automatique permettant de résoudre simultanément plusieurs tâches différentes tout en prenant en compte les dépendances entre les tâches. Un modèle d'apprentissage multi-tâches comprend une partie commune à chaque tâche et une partie propre à chaque tâche. L'apprentissage multitâche permet d'améliorer l'apprentissage d'un modèle particulier en utilisant les caractéristiques comprises dans toutes les tâches. Ainsi, selon le deuxième mode de réalisation, pour chaque vol V de chaque turbomachine TM, chaque sous-modèle de prédiction Hᵥ est égal à φ o h_{V}, la fonction φ étant commune à chaque modèle H_{V} et la fonction fv étant propre à chaque sous-modèle fv.

Le modèle d'apprentissage multitâche peut être un modèle choisi parmi un réseau de neurones, un arbre de régression, une forêt aléatoire, un séparateur à vastes marges ou une régression linéaire.

Par exemple, Chaque modèle de prédiction H_{V} peut être associé à un ensemble de paramètres d'entrainement, dont une partie est commune à tous les autres sous-modèles de prédiction, et une partie propre audit modèle.

Ce deuxième mode de réalisation est avantageux car il permet diminution de la fonction coût permettant l'estimation de chaque modèle de prédiction stabilisée H_{V} dans le cas où les données stabilisées de l'ensemble S sont bruitées ou peu nombreuses.

L'étape 103 d'estimation du modèle de prédiction stabilisée H peut comprendre, dans ce mode de réalisation, une étape de construction d'un modèle de prédiction stabilisée H_{VI} pour le vol d'intérêt VI, à partir d'au moins un modèle de prédiction stabilisée H_{V}, le modèle H étant le modèle H_{VI} dans ce cas.

Selon un mode de réalisation, le modèle de prédiction stabilisée H_{VI} est construit à partir d'au moins un modèle de prédiction stabilisé H_{C} choisi, le modèle de prédiction H_{C} étant estimé un vol C, le vol C étant choisi parmi une pluralité de vols V lorsqu'il y a plusieurs vol V, et étant le vol V lorsqu'il n'y a qu'un vol V. Le modèle de prédiction stabilisée H_{C} est choisi, parmi les modèles de prédictions stabilisée Hv estimés, selon une condition C1.

Le modèle de prédiction stabilisée H_{VI} peut être construit à partir d'un modèle de prédiction H_{C} choisi tel que H_{VI} peut être proportionnel ou égal au modèle de prédiction stabilisée H_{C}

Selon un mode de réalisation dans lequel les données d'apprentissage transitoires comprises dans l'ensemble T sont construites à partir d'une pluralité de couples de matrices (*χ_{VT},ψ_{VT}*) pour chaque vol V, dont le couple (*χ_{CT},ψ_{CT}*) correspondant au vol C, et à partir du couple de matrices (*χ_{VIT},ψ_{VIT}*), la condition C1 permettant de choisir un le modèle de prédiction H_{C} pour construire le modèle H_{VI} peut être une condition sur la distance entre les matrices χ*_{VIT}* et *χ_{CT}*.

Par exemple, la distance entre les matrices χ*_{VIT}* et χ*_{CT}* est inférieure à un seuil S3, S3 étant par exemple un réel positif ou nul.

Par exemple, la distance entre les matrices χ*_{VIT}* et χ*_{CT}* est minimale par rapport aux distances respectives entre chaque matrice *χ_{VT}* pour chaque vol V et la matrice *χ_{VIT}*.

Selon un mode de réalisation dans lequel les données d'apprentissage stabilisées comprises dans l'ensemble S sont construites à partir d'une pluralité de couples de matrices (*χ_{VS},ψ_{VS}*) pour chaque vol V, dont le couple (*χ_{CS},ψ_{CS}*) correspondant au vol C, la condition C1 permettant de choisir le modèle de prédiction stabilisée H_{C} pour construire le modèle H_{VI} peut être une condition sur la fonction coût minimisant, pour le vol C, l'écart entre la matrice Hv(f(*χ_{CS}*)*,χ_{VC}*) et la matrice ψ*_{CS}*. La condition C1 peut être par exemple : le modèle de prédiction stabilisée H_{C} choisi est le modèle ayant la fonction de coût minimale par rapport aux autres fonctions coûts de chaque modèle de prédiction stabilisée H_{V} pour chaque vol V de chaque turbomachine TM de l'ensemble stabilisé S.

Selon un mode de réalisation dans lequel les données d'apprentissage stabilisées comprises dans l'ensemble S sont construites à partir de plusieurs couples de matrices, par exemple l'ensemble des couples de matrices suivants (*χ_{VS},ψ_{VS}*), _{1< V ≤} *_{N},* N étant un entier strictement supérieur à 1, et selon lequel des modèles de prédiction stabilisées (H_{V}) _{1< V ≤ *N*} ont été estimés dans une sous-étape de l'étape 103 du procédé 100, le modèle de prédiction stabilisée H_{VI} peut être construit à partir d'une moyenne pondérée de k modèles de prédiction stabilisé parmi les N modèles de prédiction stabilisées (H_{V}) _{1< V ≤ *N*}, k étant un entier compris entre 1 et N, la condition C1 étant sur le nombre de k, par exemple les k modèles de prédiction stabilisées parmi l'ensemble de N modèles de prédiction stabilisées (H_{V}) _{1< V ≤ *N*} ayant les k fonctions coûts les plus petites parmi les N fonctions coût.

Selon un mode de réalisation dans lequel les données d'apprentissage stabilisées comprises dans l'ensemble S sont construites à partir d'une pluralité de couples de matrices (*χ_{VS},ψ_{VS}*) pour chaque vol V, dont le couple (*χ_{CS},ψ_{CS}*) correspondant au vol C, la condition C1 permettant de choisir le modèle de prédiction stabilisée H_{C} pour construire le modèle H_{VI} peut être une condition sur l'erreur de généralisation du modèle H_{C} sur les données comprises dans l'ensemble S à l'exception des données concernant le vol C.

On entend par "erreur de généralisation d'un modèle " la capacité du modèle à pouvoir effectuer des prédictions robustes sur des nouvelles données, non utilisées lors de l'apprentissage.

Selon le mode de réalisation précédent, la condition C1 peut être par exemple : le modèle de prédiction stabilisée H_{C} choisi est le modèle ayant l'erreur de généralisation minimale par rapport aux autres erreurs de généralisations respectives de chaque modèle de prédiction stabilisée H_{V} pour chaque vol V de chaque turbomachine TM de l'ensemble stabilisé S.

Selon un mode de réalisation dans lequel les données d'apprentissage stabilisées comprises dans l'ensemble S sont construites à partir de plusieurs couples de matrices, par exemple l'ensemble des couples de matrices suivants (*χ_{VS},ψ_{VS}*), _{1< V ≤} *_{N},* N étant un entier strictement supérieur à 1, et selon lequel des modèles de prédiction stabilisées (H_{V}) _{1< V ≤ *N*} ont été estimés à l'étape 103 du procédé 100, le modèle de prédiction stabilisée H_{VI} peut être construit à partir d'une moyenne pondérée de k modèles de prédiction stabilisé parmi les N modèles de prédiction stabilisées (H_{V}) _{1< V ≤ *N*}, k étant un entier compris entre 1 et N, la condition C1 étant sur le nombre de k, par exemple les k modèles de prédiction stabilisées parmi l'ensemble de N modèles de prédiction stabilisées (H_{V}) _{1< V ≤ *N*} ayant les k erreurs de généralisation les plus petites parmi les N erreurs de généralisations.

Le procédé 100 comprend en outre une étape d'estimation 104 d'une matrice Y_{SI,} de valeurs de paramètres de sortie relatifs à la turbomachine d'intérêt pour au moins un instant de vol du le vol d'intérêt en fonction du modèle H associé au vecteur à la matrice X_{SC} et au moins une partie du modèle transitoire f.

Selon un premier mode de réalisation, dans lequel le modèle transitoire f est formé d'au moins un sous-modèle f_{V} pour chaque vol V de l'ensemble T, et en particulier du sous-modèle f_{VI}, la partie du modèle transitoire f est le sous-modèle f_{VI}, et la matrice Y_{SI} est estimée en fonction du modèle H associé à la matrice f_{VI}(X_{SC}) et à la matrice Xsc tel que Y_{SI} = H( f_{VI}(X_{SC}), X_{SC}).

Selon un deuxième mode de réalisation, dans lequel le modèle transitoire f est le modèle de prédiction transitoire global tel que f(*X_{T}*) *= Y_{T},* et en particulier du sous-modèle f_{VI}, la partie du modèle transitoire f le modèle de prédiction transitoire global f, et la matrice Y_{SI} est estimée en fonction du modèle H associé à la matrice f(Xsc) et à la matrice Xsc tel que Y_{SI} = H( f(X_{SC}), X_{SC}).

Selon un troisième mode de réalisation, selon lequel H est le modèle H_{VI}, Selon un mode de réalisation, la matrice Y_{SI} est définie telle que Ysi = H_{VI} ( f(*X_{SC}* ), *X_{SC}*).

Le procédé 100 peut comprendre en outre une étape 105 de calcul de marge, la marge étant proportionnelle à la différence entre la matrice d'intérêt Y_{SI} et une matrice *Yₘₚ*, la matrice *Yₘₚ* étant la sortie d'un modèle physique représentatif du pire cas pour l'entrée X_{SC}, le pire cas représentant le moteur le plus dégradé possible avant problème. Ainsi, selon un mode de réalisation, le calcul de marge s'effectue tel que : *marge = Y_{SI}* - *Yₘₚ*.

Une estimation de l'état de santé du moteur est réalisée à partir du calcul de marge dépendant de la matrice d'intérêt YSI.

La surveillance de l'état de santé de la turbomachine d'intérêt TMI peut ainsi être réalisée grâce au calcul de marge.

Un autre aspect de l'invention concerne un ordinateur configuré pour mettre en œuvre le procédé selon le premier aspect de l'invention.

## Revendications

1. Procédé (100) de surveillance, mis en œuvre par ordinateur, de l'état de santé d'une turbomachine d'intérêt TMI d'aéronef pour un vol d'intérêt VI de l'aéronef, à partir d'une matrice consigne Xsc comprenant au moins une valeur dite valeur consigne d'au moins un paramètre d'entrée relatif à la turbomachine d'intérêt TMI en régime stabilisé, l'au moins une valeur consigne correspondant à au moins une valeur souhaitée de l'au moins un paramètre d'entrée, le procédé comportant les étapes suivantes :
- Construction (101) d'une base de données d'entrainement comprenant :
∘ un ensemble dit transitoire T comportant des données transitoires d'apprentissage comprenant des valeurs de l'au moins un paramètre d'entrée et des valeurs d'au moins un paramètre de sortie mesurées lors d'au moins un instant d'enregistrement de vol d'au moins un vol V d'au moins une turbomachine TM fonctionnant en régime transitoire et du vol d'intérêt de la turbomachine d'intérêt TMI, chaque paramètre de sortie étant lié à au moins un paramètre d'entrée de la turbomachine et à l'état de santé de la turbomachine ;
∘ un ensemble dit stabilisé S comportant des données stabilisées d'apprentissage comprenant des valeurs de l'au moins un paramètre d'entrée et des valeurs de l'au moins un paramètre de sortie mesurées lors de chaque instant d'enregistrement de vol de chaque vol V, à l'exception du vol d'intérêt VI, de chaque turbomachine TM fonctionnant en régime stabilisé ;
- Estimation (102) d'un modèle de prédiction transitoire f sur les données transitoires d'apprentissage de l'ensemble transitoire T, le modèle de prédiction transitoire permettant de prédire des valeurs de l'au moins un paramètre de sortie à partir de valeurs de l'au moins un paramètre d'entrée en régime transitoire ;
- Estimation (103) d'un modèle de prédiction stabilisée H à partir du modèle de prédiction transitoire f et des données stabilisées d'apprentissage comprises dans l'ensemble stabilisé S, le modèle de prédiction stabilisée permettant de prédire des valeurs de l'au moins un paramètre de sortie à partir de valeurs de l'au moins un paramètre d'entrée en régime stabilisé ;
- Estimation (104) d'une matrice d'intérêt Y_{SI} représentant le comportement de la turbomachine d'intérêt TMI en régime stabilisé pour le vol d'intérêt VI, l'estimation étant réalisée à partir du modèle de prédiction stabilisée H, d'au moins une partie du modèle de prédiction transitoire f et de la matrice consigne Xsc, la matrice d'intérêt Y_{SI} comprenant au moins une valeur de l'au moins un paramètre de sortie attendue pour l'au moins une valeur consigne ;
- Estimation de l'état de santé de la turbomachine d'intérêt à partir d'un calcul de marge dépendant de la matrice d'intérêt Y_{SI}.

2. Procédé selon la revendication précédente, dans lequel l'au moins un paramètre d'entrée comprend au moins un paramètre de fonctionnement d'une turbomachine parmi : vitesse de rotation d'un arbre de la turbomachine, température d'une chambre de combustion de la turbomachine, couple délivré par la turbomachine, et puissance délivrée par la turbomachine, et/ou au moins un paramètre propre à un environnement extérieur dans lequel est situé la turbomachine pendant un vol parmi : température de l'environnement extérieur et pression de l'environnement extérieur ;
dans lequel l'au moins un paramètre de sortie comprend au moins un paramètre de fonctionnement d'une turbomachine parmi : vitesse de rotation d'un arbre de la turbomachine, température d'une chambre de combustion de la turbomachine, couple délivré par la turbomachine, et puissance délivrée par la turbomachine.

3. Procédé selon la revendication 2, dans lequel l'au moins un paramètre d'entrée est : une vitesse de rotation d'un premier arbre de la turbomachine, une vitesse de rotation d'un deuxième arbre de la turbomachine, une température d'un environnement extérieur, une pression de l'environnement extérieur ; dans lequel l'au moins un paramètre de sortie est : une température d'une chambre de combustion de la turbomachine et un couple délivré par la turbomachine.

4. Procédé selon la revendication précédente selon lequel la turbomachine TM est la turbomachine d'intérêt.

5. Procédé selon l'une quelconque des revendications précédentes dans lequel :
- les données transitoires d'apprentissage de l'ensemble T sont construites, pour chaque vol V de chaque turbomachine TM, à partir d'un couple (χ*_{VT},*ψ*_{VT}*):
∘ la matrice *χ_{VT},* comprenant au moins une ligne et au moins une colonne, chaque ligne correspondant à un paramètre d'entrée de la turbomachine TM en régime transitoire, chaque paramètre d'entrée de chaque ligne étant différent des autres paramètres d'entrée des autres lignes, chaque colonne correspondant à un instant d'enregistrement du vol V, chaque instant d'enregistrement de chaque colonne étant différent des autres instants d'enregistrements des autres colonnes,
∘ la matrice ψ*_{VT},* comprenant au moins une ligne et au moins une colonne, chaque ligne correspondant à un paramètre de sortie de la turbomachine TM en régime transitoire, chaque paramètre de sortie de chaque ligne étant différent des autres paramètres d'entrée des autres lignes, chaque colonne correspondant à un instant d'enregistrement du vol V, chaque instant d'enregistrement de chaque colonne étant différent des autres instants d'enregistrements des autres lignes,
- les données stabilisées d'apprentissage de l'ensemble S sont construites, pour chaque vol V de chaque turbomachine TM, à l'exception du vol d'intérêt, à partir du couple (χ*_{VS},*ψ*_{VS}*):
∘ la matrice *χ_{VS},* comprenant au moins une ligne et au moins une colonne, chaque ligne correspondant à un paramètre d'entrée de la turbomachine TM en régime transitoire, chaque paramètre d'entrée de chaque ligne étant différent des autres paramètres d'entrée des autres lignes, chaque colonne correspondant à un instant d'enregistrement du vol V, chaque instant d'enregistrement de chaque colonne étant différent des autres instants d'enregistrements des autres colonnes,
∘ la matrice ψ*_{VS}*, comprenant au moins une ligne et au moins une colonne, chaque ligne correspondant à un paramètre de sortie de la turbomachine TM en régime transitoire, chaque paramètre de sortie de chaque ligne étant différent des autres paramètres d'entrée des autres lignes, chaque colonne correspondant à un instant d'enregistrement du vol V, chaque instant d'enregistrement de chaque colonne étant différent des autres instants d'enregistrements des autres colonnes.

6. Procédé selon les revendications 4 et 5 selon lequel un vol V de l'ensemble T est le vol d'intérêt VI et l'ensemble T est en outre construit à partir du couple (*χ_{VIT}*,*ψ_{VT}*).

7. Procédé selon l'une quelconque des revendications 4 à 6 selon lequel, pour chaque vol V de chaque turbomachine TM de l'ensemble T :
- les données d'apprentissage transitoires de l'ensemble T comprennent le couple (χ*_{VT},*ψ*_{VT}*) :
- le modèle de prédiction transitoire f est formé d'au moins un sous-modèle f_{V}, tel que fᵥ(*χ_{VT}*) = ψ*_{VT}*.

8. Procédé selon la revendication 7 selon lequel le modèle de prédiction stabilisée H est défini tel que, pour chaque vol V de chaque turbomachine TM de l'ensemble S, H(fv(χ*_{VS}*),χ*_{VS}*) = ψ*_{VS}*.

9. Procédé selon l'une quelconque des revendications 5 à 6 :
- les données transitoires d'apprentissage de l'ensemble T comprennent :
∘ Une matrice *X_{T}* résultant d'une concaténation horizontale de chaque matrice *χ_{VT},*
∘ Une matrice *Y_{T}* résultant de concaténation horizontale de chaque matrice ψ*_{VT}*,
Et selon lequel le modèle de prédiction transitoire f est défini tel que f(*X_{T}*) *= Y_{T}.*

10. Procédé selon la revendication précédente selon lequel les données stabilisées d'apprentissage de l'ensemble S comprennent :
∘ Une matrice *X_{S}* résultant d'une concaténation horizontale de chaque matrice *χ_{VS},*
∘ Une matrice *Y_{S}* résultant de concaténation horizontale de chaque matrice ψ*_{VS}*,
et selon lequel le modèle de prédiction stabilisée H est défini tel que H(f(*X_{S}*), *X_{S}*) = *Y_{S}.*

11. Procédé selon l'une quelconque des revendications 1, 4, 5, 6 ou 9 selon lequel l'estimation d'un modèle de prédiction stabilisée H à partir du modèle de prédiction transitoire f et des données stabilisées d'apprentissage comprises dans l'ensemble stabilisé S comprend les sous-étapes suivantes :
- Pour chaque vol V de chaque turbomachine TM, à l'exception du vol d'intérêt VI, estimation d'un modèle de prédiction stabilisée Hv à partir du modèle de prédiction transitoire f et des données stabilisées d'apprentissage de chaque instant d'enregistrement de vol du vol V, comprises dans l'ensemble stabilisé S ;
- Construction d'un modèle de prédiction stabilisée H_{VI} pour le vol d'intérêt VI, à partir d'au moins un modèle de prédiction stabilisée Hc estimé pour un vol C, le vol C étant un vol parmi le ou les vols V ;
Le modèle de prédiction stabilisée H étant le modèle de prédiction stabilisée H_{VI}.

12. Procédé (100) selon la revendication 9, la revendication 11 et l'une des revendications 5 ou 6, selon lequel, pour chaque vol V de chaque turbomachine TM de l'ensemble stabilisé S, à l'exception du vol d'intérêt VI de la turbomachine d'intérêt TMI :
- les données stabilisées d'apprentissage de l'ensemble S comprennent le couple (χ*_{VS},* ψ*_{VS}* ),
- le modèle de prédiction stabilisée Hv est défini tel que, Hv(f(*χ_{VS}*),χ*_{VS}*) = ψ*_{VS}.*

13. Procédé (100) selon l'une quelconque des revendications 11 ou 12 selon lequel le modèle de prédiction stabilisée H_{VI} est construit à partir d'au moins le modèle de prédiction stabilisée Hc choisi selon une condition C1.

14. Procédé (100) selon la revendication 6 et la revendication 13 selon lequel la condition C1 est :
- La distance entre χ*_{CT}* et χ*_{VIT}* est minimale;
- La fonction coût du modèle de prédiction stabilisée Hc est minimale ; ou
- L'erreur de généralisation du modèle de prédiction stabilisée Hc est minimale.

15. Procédé selon l'une quelconque des revendications précédentes comportant un calcul de marge (105), la marge étant proportionnelle à la différence entre la matrice d'intérêt Y_{SI} et une matrice *Yₘₚ*, la matrice *Yₘₚ* étant la sortie d'un modèle physique représentatif du pire cas pour l'entrée X_{SC}.

16. Produit programme d'ordinateur comprenant des instructions qui, lorsque le programme est exécuté par un ordinateur, conduisent celui-ci à mettre en œuvre le procédé (100) selon l'une quelconque des revendications précédentes.

17. Support lisible par ordinateur comprenant des instructions qui, lorsqu'elles sont exécutées par un ordinateur, conduisent celui-ci à mettre en œuvre le procédé selon l'une quelconque des revendications 1 à 15.

## Patentansprüche

1. Verfahren (100) zur computergestützten Überwachung des Betriebszustands einer relevanten Turbomaschine TMI eines Luftfahrzeugs für einen relevanten Flug VI des Luftfahrzeugs, anhand einer Sollwertmatrix X(sc), die mindestens einen sogenannten Sollwert mindestens eines Eingangsparameters bezüglich der relevanten Turbomaschine TMI im stabilisierten Betrieb umfasst, wobei der mindestens eine Sollwert mindestens einem gewünschten Wert des mindestens einen Eingangsparameters entspricht, wobei das Verfahren die folgenden Schritte umfasst:
- Erstellen (101) einer Trainingsdatenbank, die Folgendes umfasst:
∘ eine sogenannte transiente Gruppe T mit transienten Trainingsdaten, die Werte des mindestens einen Eingangsparameters und Werte mindestens eines Ausgangsparameters umfassen, die zu mindestens einem Zeitpunkt einer Flugaufzeichnung von mindestens einem Flug V mindestens einer im transienten Betrieb laufenden Turbomaschine TM und des relevanten Fluges der relevanten Turbomaschine TMI gemessen werden, wobei jeder Ausgangsparameter mit mindestens einem Eingangsparameter der Turbomaschine und dem Betriebszustand der Turbomaschine in Zusammenhang steht;
∘ eine sogenannte stabilisierte Gruppe S mit stabilisierten Trainingsdaten, die Werte des mindestens einen Eingangsparameters und Werte des mindestens einen Ausgangsparameters enthalten, die zu jedem Zeitpunkt einer Flugaufzeichnung jedes Fluges V, mit Ausnahme des relevanten Fluges VI, jeder im stabilisierten Betriebszustand laufenden Turbomaschine TM gemessen werden;
- Schätzung (102) eines transienten Vorhersagemodells f anhand der transienten Trainingsdaten der transienten Gruppe T, wobei das transiente Vorhersagemodell die Vorhersage von Werten des mindestens einen Ausgangsparameters ausgehend von Werten des mindestens einen Eingangsparameters im transienten Betriebszustand ermöglicht;
- Schätzung (103) eines stabilisierten Vorhersagemodells H ausgehend vom transienten Vorhersagemodell f und den stabilisierten Trainingsdaten, die in der stabilisierten Gruppe S enthalten sind, wobei das stabilisierte Vorhersagemodell es ermöglicht, Werte des mindestens einen Ausgangsparameters ausgehend von Werten des mindestens einen Eingangsparameters im stabilisierten Betriebszustand vorherzusagen;
- Schätzung (104) einer relevanten Matrix Y_{SI}, die das Verhalten der relevanten Turbomaschine TMI im stabilisierten Betriebszustand für den relevanten Flug VI darstellt, wobei die Schätzung auf der Grundlage des stabilisierten Vorhersagemodells H, mindestens eines Teils des transienten Vorhersagemodells f und der Sollwertmatrix X_{SC} erfolgt, wobei die relevante Matrix Y_{SI} mindestens einen Wert des mindestens einen erwarteten Ausgangsparameters für den mindestens einen Sollwert umfasst;
- Schätzung des Betriebszustands der relevanten Turbomaschine anhand einer von der relevanten Matrix Y_{SI} abhängigen Margenberechnung.

2. Verfahren nach dem vorstehenden Anspruch, bei dem der mindestens eine Eingangsparameter mindestens einen Betriebsparameter einer Turbomaschine umfasst, nämlich: Drehzahl einer Welle der Turbomaschine, Temperatur einer Brennkammer der Turbomaschine, von der Turbomaschine abgegebenes Drehmoment und von der Turbomaschine abgegebene Leistung, und/oder mindestens einen Parameter, der für eine Außenumgebung charakteristisch ist, in der sich die Turbomaschine während eines Fluges befindet, nämlich: Temperatur der Außenumgebung und Druck der Außenumgebung;
bei dem der mindestens eine Ausgangsparameter mindestens einen Betriebsparameter einer Turbomaschine umfasst, nämlich: Drehzahl einer Welle der Turbomaschine, Temperatur einer Brennkammer der Turbomaschine, von der Turbomaschine abgegebenes Drehmoment und von der Turbomaschine abgegebene Leistung.

3. Verfahren nach Anspruch 2, bei dem der mindestens eine Eingangsparameter ist: eine Drehzahl einer ersten Welle der Turbomaschine, eine Drehzahl einer zweiten Welle der Turbomaschine, eine Außentemperatur, ein Außendruck; wobei der mindestens eine Ausgangsparameter eine Temperatur einer Brennkammer der Turbomaschine und ein von der Turbomaschine abgegebenes Drehmoment ist.

4. Verfahren nach dem vorstehenden Anspruch, bei dem die Turbomaschine TM die relevante Turbomaschine ist.

5. Verfahren nach einem der vorstehenden Ansprüche, bei dem:
- die transienten Trainingsdaten der Gruppe T für jeden Flug V jeder Turbomaschine TM anhand eines Paares(χ*_{VT},* ψ*_{VT}*) gebildet werden:
∘ die Matrix *χ_{VT},* die mindestens eine Zeile und mindestens eine Spalte umfasst, wobei jede Zeile einem Eingangsparameter der Turbomaschine TM im transienten Betrieb entspricht und sich jeder Eingangsparameter jeder Zeile von den anderen Eingangsparametern der anderen Zeilen unterscheidet, wobei jede Spalte einem Aufzeichnungszeitpunkt des Fluges V entspricht und jeder Aufzeichnungszeitpunkt jeder Spalte sich von den anderen Aufzeichnungszeitpunkten der anderen Spalten unterscheidet,
∘ die Matrix ψ*_{VT}*, die mindestens eine Zeile und mindestens eine Spalte umfasst, wobei jede Zeile einem Ausgangsparameter der Turbomaschine TM im transienten Betrieb entspricht und jeder Ausgangsparameter jeder Zeile sich von den anderen Eingangsparametern der anderen Zeilen unterscheidet, wobei jede Spalte einem Aufzeichnungszeitpunkt des Fluges V entspricht und jeder Aufzeichnungszeitpunkt jeder Spalte sich von den anderen Aufzeichnungszeitpunkten der anderen Zeilen unterscheidet,
- die stabilisierten Trainingsdaten der Gruppe S werden für jeden Flug V jeder Turbomaschine TM, mit Ausnahme des relevanten Fluges, ausgehend vom Paar (χ*_{VS},* ψ*_{VS}*) erstellt:
∘ die Matrix *χ_{VS},* die mindestens eine Zeile und mindestens eine Spalte umfasst, wobei jede Zeile einem Eingangsparameter der Turbomaschine TM im transienten Betrieb entspricht und sich jeder Eingangsparameter jeder Zeile von den anderen Eingangsparametern der anderen Zeilen unterscheidet, wobei jede Spalte einem Aufzeichnungszeitpunkt des Fluges V entspricht und sich jeder Aufzeichnungszeitpunkt jeder Spalte von den anderen Aufzeichnungszeitpunkten der anderen Spalten unterscheidet,
∘ die Matrix ψ*_{VS},* die mindestens eine Zeile und mindestens eine Spalte umfasst, wobei jede Zeile einem Ausgangsparameter der Turbomaschine TM im transienten Betrieb entspricht, wobei sich jeder Ausgangsparameter jeder Zeile von den anderen Eingangsparametern der anderen Zeilen unterscheidet, wobei jede Spalte einem Aufzeichnungszeitpunkt des Fluges V entspricht und sich jeder Aufzeichnungszeitpunkt jeder Spalte von den anderen Aufzeichnungszeitpunkten der anderen Spalten unterscheidet.

6. Verfahren nach den Ansprüchen 4 und 5, bei dem ein Flug V der Gruppe T der relevante Flug VI ist und die Gruppe T zudem aus dem Paar (*χ_{VIT},* ψ*_{VIT}*) gebildet wird.

7. Verfahren nach einem der Ansprüche 4 bis 6, bei dem für jeden Flug V jeder Turbomaschine TM der Gruppe T:
- die transienten Trainingsdaten der Gruppe T das Drehmoment (*χ_{VIT}, ψ_{VIT}*) umfassen,
- das transiente Vorhersagemodell f aus mindestens einem Untermodell fᵥ besteht, sodass f*_{V}*(χ*_{VT}*) = ψ*_{VT}* gilt.

8. Verfahren nach Anspruch 7, bei dem das stabilisierte Vorhersagemodell H so definiert ist, dass für jeden Flug V jeder Turbomaschine TM der Gruppe S gilt, H(f*_{V}*(χ*_{VS}*), χ*_{VS}*) = ψ*_{VS}*.

9. Verfahren nach einem der Ansprüche 5 bis 6:
- die transienten Trainingsdaten der Gruppe T umfassen:
∘ eine Matrix *X_{T},* die sich aus der horizontalen Verkettung jeder Matrix χ*_{VT}* ergibt,
∘ eine Matrix *Y_{T},* die sich aus der horizontalen Verkettung jeder Matrix ψ*_{VT}* ergibt,
und wobei das transiente Vorhersagemodell f so definiert ist, dass f(*X_{T}*) = *Y_{T}.*

10. Verfahren nach dem vorstehenden Anspruch, bei dem die stabilisierten Trainingsdaten der Gruppe S umfassen:
∘ eine Matrix *X_{S}*, die sich aus einer horizontalen Verkettung jeder Matrix χ*_{VS}* ergibt,
∘ eine Matrix *Y_{S},* die sich aus der horizontalen Verkettung jeder Matrix ψ*_{VS}* ergibt,
und wobei das stabilisierte Vorhersagemodell H so definiert ist, dass H (f(*X_{S}*), X_{S}) = *Y_{S}.*

11. Verfahren nach einem der Ansprüche 1, 4, 5, 6 oder 9, bei dem die Schätzung eines stabilisierten Vorhersagemodells H ausgehend vom transienten Vorhersagemodell f und den stabilisierten Trainingsdaten, die in der stabilisierten Gruppe S enthalten sind, die folgenden Teilschritte umfasst:
- Für jeden Flug V jeder Turbomaschine TM, mit Ausnahme des relevanten Fluges VI, Schätzung eines stabilisierten Vorhersagemodells H_{V} ausgehend vom transienten Vorhersagemodell f und den stabilisierten Trainingsdaten jedes Flugaufzeichnungszeitpunkts des Fluges V, die in der stabilisierten Gruppe S enthalten sind;
- Erstellung eines stabilisierten Vorhersagemodells H_{VI} für den relevanten Flug VI ausgehend von mindestens einem stabilisierten Vorhersagemodell Hc, das für einen Flug C geschätzt wurde, wobei der Flug C ein Flug unter den Flügen V ist;
wobei das stabilisierte Vorhersagemodell H das stabilisierte Vorhersagemodell H_{VI} ist.

12. Verfahren (100) nach Anspruch 9, Anspruch 11 und einem der Ansprüche 5 oder 6, bei dem für jeden Flug V jeder Turbomaschine TM der stabilisierten Gruppe S, mit Ausnahme des relevanten Fluges VI der relevanten Turbomaschine TMI:
- die stabilisierten Trainingsdaten der Gruppe S das Drehmoment (χ*_{VS},* ψ*_{VS}*) umfassen,
- das stabilisierte Vorhersagemodell H_{V} so definiert ist, dass Hv(f(χ*_{VS}*), *χ_{VS}*) = ψ*_{VS}* gilt.

13. Verfahren (100) nach einem der Ansprüche 11 oder 12, bei dem das stabilisierte Vorhersagemodell H_{VI} aus mindestens dem stabilisierten Vorhersagemodell Hc gebildet wird, das gemäß einer Bedingung C1 ausgewählt wurde.

14. Verfahren (100) nach Anspruch 6 und Anspruch 13, bei dem die Bedingung C1 lautet:
- Der Abstand zwischen *χ_{CT}* und *χ_{VIT}* ist minimal;
- Die Kostenfunktion des stabilisierten Vorhersagemodells Hc ist minimal; oder
- Der Generalisierungsfehler des stabilisierten Vorhersagemodells Hc ist minimal.

15. Verfahren nach einem der vorstehenden Ansprüche, das eine Margenberechnung (105) umfasst, wobei die Marge proportional zur Differenz zwischen der relevanten Matrix Y_{SI} und einer Matrix *Yₘₚ* ist, wobei die Matrix *Yₘₚ* die Ausgabe eines physikalischen Modells ist, das den Worst-Case-Fall für die Eingabe χ_{SC} darstellt.

16. Computerprogrammprodukt, das Anweisungen umfasst, die, wenn das Programm von einem Computer ausgeführt wird, diesen veranlassen, das Verfahren (100) nach einem der vorstehenden Ansprüche durchzuführen.

17. Computerlesbares Medium, das Anweisungen umfasst, die, wenn sie von einem Computer ausgeführt werden, diesen veranlassen, das Verfahren nach einem der Ansprüche 1 bis 15 durchzuführen.

## Claims

1. A method (100), implemented by computer, for monitoring the state of health of a turbomachine of interest TMI of an aircraft for a flight of interest VI of the aircraft, from a setpoint matrix Xsc comprising at least one so-called setpoint value of at least one input parameter relating to the turbomachine of interest TMI in steady state, the at least one setpoint value corresponding to at least one desired value of the at least one input parameter, the method including the following steps:
- Constructing (101) a training database comprising:
∘ a so-called transient set T including transient learning data comprising values of the at least one input parameter and values of at least one output parameter measured during at least one flight recording instant of at least one flight V of at least one turbomachine TM operating in transient state and of the flight of interest of the turbomachine of interest TMI, each output parameter being related to at least one input parameter of the turbomachine and to a state of health of the turbomachine;
∘ a so-called steady-state set S including steady-state learning data comprising values of the at least one input parameter and values of the at least one output parameter measured at each flight recording instant of each flight V, except the flight of interest VI, of each turbomachine TM operating in steady state;
- Estimating (102) a transient prediction model f from the transient learning data of the transient set T, the transient prediction model allowing the prediction of values of the at least one output parameter from values of the at least one input parameter in transient state;
- Estimating (103) a steady-state prediction model H from the transient prediction model f and the steady-state learning data included in the steady-state set S, the steady-state prediction model allowing the prediction of values of the at least one output parameter from values of the at least one input parameter in steady state;
- Estimating (104) a matrix of interest Y_{SI} representing the behaviour of the steady-state turbomachine of interest TMI for the flight of interest VI, the estimating being performed from the steady-state prediction model H, at least a part of the transient prediction model f and the setpoint matrix Xsc , the matrix of interest comprising at least one value expected of the at least one output parameter for the at least one setpoint valeur;
- Estimating the state of health of the turbomachine of interest from a margin calculation dependent on the matrix of interest Y_{SI}.

2. The method according to the preceding claim, wherein the at least one input parameter comprises at least one operating parameter of a turbomachine, selected from: rotational speed of a shaft of the turbomachine, temperature of a combustion chamber of the turbomachine, torque delivered by the turbomachine, and power delivered by the turbomachine, and/or at least one parameter specific to an external environment in which the turbomachine is located during a flight, selected from: external environment temperature and external environment pressure;
wherein the at least one output parameter comprises at least one operating parameter of a turbomachine, selected from: rotational speed of a shaft of the turbomachine, temperature of a combustion chamber of the turbomachine, torque delivered by the turbomachine, and power delivered by the turbomachine

3. The method according to claim 2, wherein the at least one input parameter is: a rotational speed of a first shaft of the turbomachine, a rotational speed of a second shaft of the turbomachine, an external environment temperature, or an external environment pressure; wherein the at least one output parameter is: a temperature of a combustion chamber of the turbomachine and a torque delivered by the turbomachine.

4. The method according to the preceding claim, wherein the turbomachine TM is the turbomachine of interest.

5. The method according to any of the preceding claims, wherein:
- the transient learning data of the set T are constructed, for each flight V of each turbomachine TM, from a pair (χ*_{VT},*ψ*_{VT}*):
∘ the matrix *χ_{VT},* comprising at least one row and at least one column, each row corresponding to an input parameter of the turbomachine TM operating in transient state, each input parameter of each row being different from the other input parameters of the other rows, each column corresponding to a recording instant of the flight V, each recording instant of each column being different from the other recording instants of the other columns,
∘ the matrix ψ*_{VT}*, comprising at least one row and at least one column, each row corresponding to an output parameter of the turbomachine TM operating in transient state, each output parameter of each row being different from the other input parameters of the other rows, each column corresponding to a recording instant of the flight V, each recording instant of each column being different from the other recording instants of the other rows,
- the steady-state learning data of the set S are constructed, for each flight V of each turbomachine TM, except the flight of interest, from the pair (χ*_{VS},*ψ*_{VS}*):
∘ the matrix *χ_{VS},* comprising at least one row and at least one column, each row corresponding to an input parameter of the turbomachine TM operating in transient state, each input parameter of each row being different from the other input parameters of the other rows, each column corresponding to a recording instant of the flight V, each recording instant of each column being different from the other recording instants of the other columns,
∘ the matrix ψ*_{VS}*, comprising at least one row and at least one column, each row corresponding to an output parameter of the turbomachine TM operating in transient state, each output parameter of each row being different from the other input parameters of the other rows, each column corresponding to a recording instant of the flight V, each recording instant of each column being different from the other recording instants of the other columns.

6. The method according to claims 4 and 5, wherein a flight V of the set T is the flight of interest VI and the set T is further constructed from the pair (*χ_{VIT}, ψ_{VIT}*).

7. The method according to any of claims 4 to 6, wherein, for each flight V of each turbomachine TM of the set T:
- the transient learning data of the set T comprise the pair (χ*_{VT},*ψ*_{VT}*);
- the transient prediction model f is formed by at least one submodel fᵥ, such that fᵥ(*χ_{VT}*) = ψ*_{VT}*.

8. The method according to claim 7, wherein the steady-state prediction model H is defined such that, for each flight V of each turbomachine TM of the set S, H(fᵥ(χ*_{VS}*), χ*_{VS}*) = ψ*_{VS}.*

9. The method according to any of claims 5 to 6:
- the transient learning data of the set T comprise:
∘ A matrix *X_{T}* resulting from horizontal concatenation of each matrix *χ_{VT},*
∘ A matrix *Y_{T}* resulting from horizontal concatenation of each matrix ψ*_{VT}*,
and wherein the transient prediction model f is defined as f(*X_{T}*) *= Y_{T}.*

10. The method according to the preceding claim, wherein the steady-state learning data of the set S comprise:
∘ A matrix *X_{S}* resulting from horizontal concatenation of each matrix Xvs,
∘ A matrix *Y_{S}* resulting from horizontal concatenation of each matrix ψ*_{VS}*,
and wherein the steady-state prediction model H is defined such that H(f(*X_{S}*),*X_{S}*) = *Y_{S}.*

11. The method according to any of claims 1, 4, 5, 6 or 9, wherein the estimating of a steady-state prediction model H from the transient prediction model f and the steady-state learning data included in the steady-state set S comprises the following sub-steps:
- For each flight V of each turbomachine TM, except the flight of interest VI, estimating a steady-state prediction model Hv from the transient prediction model f and the steady-state learning data of each flight recording instant of the flight V, included in the steady-state set S;
- Constructing a steady-state prediction model H_{VI} for the flight of interest VI, from at least one steady-state prediction model H_{C} estimated for a flight C, the flight C being one flight of the flight or flights V;
the steady-state prediction model H being the steady-state prediction model H_{VI}.

12. The method (100) according to claim 9, claim 11 and one of claims 5 or 6, wherein, for each flight V of each turbomachine TM of the steady-state set S, except the flight of interest VI of the turbomachine of interest TMI:
- the steady-state learning data of the set S comprise the pair (χ*_{VS},* ψ*_{VS}* ),
- the steady-state prediction model Hv is defined such that Hv(f(χ*_{VS}*),χ*_{VS}*) = ψ*_{VS}.*

13. The method (100) according to any of claims 11 or 12, wherein the steady-state prediction model H_{VI} is constructed from at least the steady-state prediction model H_{C} chosen according to a condition C1.

14. The method (100) according to claim 6 and claim 13, wherein the condition C1 is:
- The distance between χ*_{CT}* and χ*_{VIT}* is minimal;
- The cost function of the steady-state prediction model H_{C} is minimal; or
- The generalisation error of the steady-state prediction model H_{C} is minimal.

15. The method according to any of the preceding claims, including a margin calculation (105), the margin being proportional to the difference between the matrix of interest Y_{SI} and a matrix *Yₘₚ*, the matrix *Yₘₚ* being the output of a physical model representing the worst case for the input X_{SC}.

16. A computer program product comprising instructions which, when the program is executed by a computer, cause the same to implement the method (100) according to any of the preceding claims.

17. A computer-readable medium comprising instructions which, when executed by a computer, cause the same to implement the method according to any of claims 1 to 15.
